(19)

Europäisches
Patentamt
European
Patent Office
Office européen
des brevets

(11) **EP 2 048 886 A1**

(12) **EUROPEAN PATENT APPLICATION**

(43) Date of publication:
**15.04.2009 Bulletin 2009/16**

(51) Int Cl.:
*H04N 7/26* (2006.01)          *H04N 7/36* (2006.01)

(21) Application number: **07019946.8**

(22) Date of filing: **11.10.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(71) Applicant: **Panasonic Corporation
Kadoma-shi
Osaka 571-8501 (JP)**

(72) Inventors:
• **Wittmann, Steffen
63225 Langen (DE)**
• **Wedi, Thomas
63225 Langen (DE)**

(74) Representative: **Grünecker, Kinkeldey,
Stockmair & Schwanhäusser
Anwaltssozietät
Leopoldstrasse 4
80802 München (DE)**

(54) **Coding of adaptive interpolation filter coefficients**

(57)      The present invention relates to hybrid video coders and decoders that employ motion compensated prediction with fractional-pel resolution and provides a method for employing an adaptive interpolation filter that optimizes the trade-off between prediction accuracy and signalling overhead. To this end, properties such as symmetries and other limitations of the adaptive interpolation filter are set beforehand. In this manner, the number of independent filter coefficients may be controlled. The filter coefficients for adaptive interpolation are then determined in accordance with the set filter properties. In order to allow the decoder to apply the very same interpolation for motion compensated prediction, the filter coefficients are signalled to the decoder. Signalling overhead is reduced by also encoding the coefficients in accordance with the set filter properties.

Fig. 6E

## Description

The present invention relates to video coding based on motion compensated prediction with fractional-pel resolution and adaptive interpolation filtering.

BACKGROUND OF THE INVENTION

Hybrid video coders apply motion-compensated prediction followed by transform coding of the resulting prediction error. Especially at fractional-pel motion vector resolution, effects like aliasing, quantization errors, errors from inaccurate motion estimation, camera noise, etc. limit the prediction efficiency of motion compensation. The concept of adaptive interpolation filtering addresses these effects. Experiments showed that it may be useful to apply a separable or a non-separable adaptive interpolation filter depending on the signal characteristics. Furthermore, on the one hand it may be useful to apply symmetric filters in order to reduce the amount of overhead data for transmission of filter coefficients, on the other hand it may be necessary to apply non-symmetric filters in order to obtain the optimal interpolated signal that is used for prediction and thus to achieve the highest coding efficiency gains.

SUMMARY OF THE INVENTION

The aim of the present invention is to provide a method for video encoding and decoding with improved coding efficiency and a corresponding apparatus.

This is achieved by the features as set forth in the independent claims.

Preferred embodiments are the subject matter of dependent claims.

It is the particular approach of the present invention to set filter properties independently for each sub-pel specific adaptive interpolation filter employed for motion compensated prediction with fractional-pel resolution and to determine filter coefficients of the adaptive interpolation filters in accordance with the set filter properties.

According to a first aspect of the present invention, a method for encoding video data based on motion compensated prediction with fractional-pel resolution and adaptive interpolation filtering is provided. The method comprises the steps of determining, in accordance with the video data, filter coefficients for a plurality of adaptive interpolation filters, each adaptive interpolation filter yielding interpolated pixel values at a distinct sub-pel position; obtaining a prediction error signal by applying motion compensated prediction based on the adaptive interpolation filters to the video data; generating encoded video data indicating the prediction error signal and the adaptive interpolation filters, and is characterized by setting filter properties independently for each of the adaptive interpolation filters, wherein the filter coefficients of the adaptive interpolation filters are determined in accordance with the set filter properties.

According to a further aspect of the present invention, a method for decoding video data based on motion compensated prediction with fractional-pel resolution and adaptive interpolation filtering is provided. The method comprises the steps of receiving encoded video data indicating a prediction error signal and a plurality of adaptive interpolation filters, each adaptive interpolation filter yielding interpolated pixel values at a distinct sub-pel position; determining filter coefficients of the adaptive interpolation filters; obtaining a video signal by employing the prediction error signal and motion compensated prediction based on the filter coefficients of the adaptive interpolation filters; and is characterized by setting filter properties independently for each of the adaptive interpolation filters, wherein the filter coefficients of the adaptive interpolation filters are determined in accordance with the set filter properties.

According to a further aspect of the present invention, an apparatus for encoding video data based on motion compensated prediction with fractional-pel resolution and adaptive interpolation filtering is provided. The apparatus comprises a determining unit for determining, in accordance with the video data, filter coefficients for a plurality of adaptive interpolation filters, each adaptive interpolation filter yielding interpolated pixel values at a distinct sub-pel position; a motion compensated prediction unit for obtaining a prediction error signal by applying motion compensated prediction based on the adaptive interpolation filters to the video data; an encoder for generating encoded video data indicating the prediction error signal and the adaptive interpolation filters, and is characterized by a setting unit for setting filter properties independently for each of the adaptive interpolation filters, wherein the filter coefficients of the adaptive interpolation filter are determined in accordance with the set filter properties.

According to a further aspect of the present invention, an apparatus for decoding video data based on motion compensated prediction with fractional-pel resolution and adaptive interpolation filtering is provided. The apparatus comprises a receiving unit for receiving encoded video data indicating a prediction error signal and a plurality of adaptive interpolation filters, each adaptive interpolation filter yielding interpolated pixel values at a distinct sub-pel position; a determining unit for determining filter coefficients of the adaptive interpolation filters; a motion compensated prediction unit for obtaining a video signal by employing the prediction error signal and motion compensated prediction based on the filter coefficients of the adaptive interpolation filters; and is characterized by a setting unit for setting filter properties independently for each of the adaptive interpolation filter, wherein the filter coefficients of the adaptive interpolation filter are determined in accordance with the set filter properties.

Preferably, filter properties for the adaptive interpolation filters are set in accordance with the video data, for instance in accordance with image content of the video data or in accordance with image resolution of the video data. In this manner, the filter properties for the adaptive interpolation filter can be set so as to minimize a size of the encoded video data, for instance by consecutively testing a plurality of different settings and selecting the setting that yields the best compression ratio.

Preferably, filter properties for the adaptive interpolation filters are set on a slice-to-slice basis. In this manner, the filter properties best suited for predicting the image content of every slice may be selected. Alternatively, the filter properties for the adaptive interpolation filters are set once for the entire video data so that the computational effort for determining the optimum filter properties and the overhead for signalling the properties can be reduced.

Preferably, the filter properties are set by selecting at least one filter property from a plurality of predefined candidate filter properties. In this case, the plurality of predefined candidate filter properties may comprise symmetry relations between filter coefficients of an adaptive interpolation filter or between filter coefficients of two distinct adaptive interpolation filters, such as a symmetry with respect to a horizontal axis, a symmetry with respect to a vertical axis, a symmetry with respect to a diagonal axis, and a rotational symmetry. Each of these symmetries may refer to the entire adaptive interpolation filter, to an individual sub-pel specific interpolation filter or to a pair of two interpolation filters that are specific for two different sub-pel positions. Further, a plurality of these symmetries may be combined and refer to one or more sub-pel specific adaptive interpolation filters.

Preferably, the plurality of predefined candidate filter properties may also comprise limitations of possible values for subsets of filter coefficients of the adaptive interpolation filters, such as a limitation of an adaptive interpolation filter to a one-dimensional interpolation filter. More preferably, the limitations comprise a limitation of an adaptive interpolation filter to separable filters. Even more preferably, the limitations comprise a limitation of an adaptive interpolation filter to filters that are separable into a horizontal and a vertical interpolation filter, wherein at least one of the horizontal and the vertical interpolation filter is invariant with respect to sub-pel translations. In this manner, the filter properties may be set so that separable filters are employed for at least some sub-pel positions, which may be advantageous in certain situations due to a reduction of the computational effort related to the application and signalling of these filters.

Preferably, the plurality of predefined candidate filter properties comprises asymmetric adaptive interpolation filters. In this manner, the video data may also be encoded with adaptive interpolation filters that are not subject to any restrictions, thus providing greatest flexibility and optimum prediction accuracy.

Preferably, the set filter properties are encoded and decoded at the encoder and the decoder side, respectively. In this manner, the decoder can detect the filter properties set by the encoder. Preferably, the encoding/decoding of the set filter properties is achieved by inserting/extracting information indicating the size of each adaptive interpolation filter into/from the encoded video data and/or by inserting/extracting information indicating a filter type of each adaptive interpolation filter into/from the encoded video data, said filter type indicating at least one of adaptive/non-adaptive, separable/non-separable, and symmetric/non-symmetric. By employing such a form of implicit signalling, the signalling overhead can be reduced.

Preferably, the filter coefficients of the adaptive interpolation filters are encoded and decoded at the encoder and the decoder side, respectively, in accordance with the set filter properties, more preferably by exploiting redundancies among the filter coefficients that are due to the set filter properties. In this manner, the amount of data providing the filter coefficients for the decoder can be minimized.

Preferably, the filter coefficients are encoded/decoded by inserting/extracting information indicating values of at least some of the filter coefficients into/from the encoded video data. More preferably, the filter coefficients are encoded/ decoded by inserting/extracting information indicating differences of values of at least some of the filter coefficients into/ from the encoded video data. In this case, the differences are preferably computed between filter coefficients that are linked by a symmetry relation, the symmetry relation being one of a symmetry with respect to a horizontal axis, a symmetry with respect to a vertical axis, a symmetry with respect to a diagonal axis, a horizontal sub-pel translation, and a vertical sub-pel translation. In this way, "approximate" symmetries between adaptive interpolation filters and within an adaptive interpolation filter may be exploited to encode the filter coefficients in a highly efficient manner. Further, the differences may also be computed with respect to filter coefficients of a previously encoded adaptive interpolation filter, such as the adaptive filter determined for a previously encoded image or slice, or with respect to filter coefficients of a predetermined interpolation filter, such as the fixed interpolation filter that is part of the H.264/AVC coding standard. In any case, such a form of differential coding of filter coefficients allows for a significant reduction of the signalling overhead.

Preferably, the filter coefficients are determined by exploiting redundancies among the filter coefficients that are due to the set filter properties. More preferably, a first subset of filter coefficients is determined by applying a symmetry operation to a second subset of filter coefficients in accordance with the set filter properties or by determining a horizontal interpolation filter and a vertical interpolation filter in accordance with the video data, wherein filter coefficients of an adaptive interpolation filter are determined from the horizontal and the vertical interpolation filter in accordance with the set filter properties. Hence, the set filter properties can be exploited to reduce the computational effort for determining the filter coefficients and/or to increase the accuracy at which these coefficients are determined.

The above and other objects and features of the present invention will become more apparent from the following description and preferred embodiments given in conjunction with the accompanying drawings, in which:

Fig. 1          is a block diagram of a conventional video encoder;

Fig. 2          is a block diagram of a conventional video decoder;

Fig. 3          is a block diagram of a video encoder applying motion compensation with adaptive filtering;

Fig. 4          is a block diagram of a video decoder applying motion compensation with adaptive filtering;

Fig. 5          is a schematic drawing of a block of video data;

Figs. 6A-F      provide an overview over symmetry properties of adaptive interpolation filters;

Fig. 7A-F       provide an overview over symmetry properties of separable adaptive interpolation filters; and

Fig. 8A-C       illustrate an exemplary signalling scheme.

DETAILED DESCRIPTION

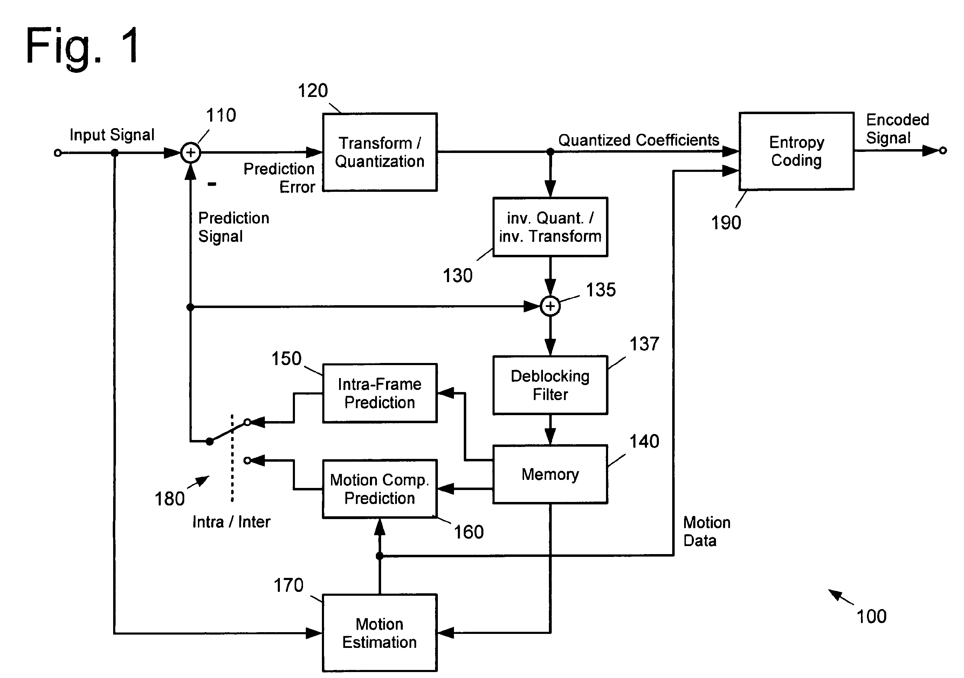

Referring to Fig. 1, an example of a conventional video encoder is illustrated. The video encoder, generally denoted by reference numeral 100, comprises a subtractor 110 for determining differences between a current block of a video image (input signal) and a prediction signal of the current block which is based on previously encoded blocks stored in memory 140. A transformation and quantization unit 120 transforms the resulting prediction error from the spatial domain to the frequency domain and quantizes the obtained transform coefficients. An entropy coding unit 190 entropy encodes the quantized transform coefficients.

In accordance with the H.264 / AVC standard, the input image is divided into macro blocks. The encoder 100 employs a Differential Pulse Code Modulation (DPCM) approach which only transmits differences between blocks of an input video sequence and their predictions based on previously encoded blocks ("the locally decoded image"). These differences are determined in subtractor 110, which receives the blocks to be encoded in order to subtract the prediction signal therefrom.

The locally decoded image is provided by a decoding unit incorporated into video encoder 100. The decoding unit performs the encoding steps in reverse manner. An inverse quantization and inverse transformation unit 130 dequantizes the quantized coefficients and applies an inverse transformation to the dequantized coefficients. In adder 135, the decoded differences are added to the prediction signal to form the locally decoded image. Further, a deblocking filter 137 reduces blocking artefacts in the decoded image.

The type of prediction that is employed by video encoder 100 depends on whether the macro blocks are encoded in "Intra" or "Inter" mode. In "Intra" mode the video encoding standard H.264/AVC uses a prediction scheme based on already encoded macro blocks of the same image in order to predict subsequent macro blocks. In "Inter" mode, motion compensated prediction between corresponding blocks of several consecutive frames is employed.

Only Intra-encoded images (I-type images) can be decoded without reference to any previously decoded image. The I-type images provide error resilience for the encoded video sequence. Further, entry points into bit streams of encoded data are provided by the I-type images in order to enable a random access, i.e. to access I-type images within the sequence of encoded video images. A switch between Intra-mode, i.e. a processing by Intra-frame prediction unit 150, and Inter-mode, i.e. a processing by motion compensated prediction unit 160, is controlled by Intra/Inter switch 180.

In "Inter" mode, a macro block is predicted from corresponding blocks of previous frames by employing motion compensation. The estimation is accomplished by a motion estimator unit 170, receiving the current input signal and the locally decoded image. Motion estimation yields two-dimensional motion vectors, representing a pixel displacement between the current block and the corresponding block in previous frames. Based on the estimated motion, a motion compensated prediction unit 160 provides a prediction signal.

In order to optimize prediction accuracy, motion vectors may be determined at sub-pel resolution, e.g. half-pel or quarter-pel resolution. A motion vector with sub-pel resolution may point to a position within a previous frame where no pixel value is available, i.e. a sub-pel position. Hence, spatial interpolation of pixel values is needed in order to perform motion compensation. According to the H.264/AVC standard, a 6-tap Wiener interpolation filter with fixed filter coefficients and a bilinear filter is applied in order to obtain pixel values for sub-pel positions. The interpolation process is done as follows:

1. The half-pel positions are calculated using the 6-tap filter horizontally and vertically.

2. The quarter-pel positions are calculated using bilinear filtering applying the already computed half-pel values as well as the existing full-pel values.

As the filter coefficients are fixed and therefore known by the decoder, no overhead data is necessary to transmit the filter to the decoder.

For both the "Intra" and the "Inter" encoding mode, the differences between the current and the predicted signal are transformed into transform coefficients by transformation / quantization unit 120. Generally, an orthogonal transformation such as a two-dimensional Discrete Cosine transformation (DCT) or an integer version thereof is employed.

The transform coefficients are quantized in order to reduce the amount of data that has to be encoded. The step of quantization is controlled by quantization tables that specify the precision and therewith the number of bits that are used to encode each frequency coefficient. Lower frequency components are usually more important for image quality than fine details so that more bits are spent for coding the low frequency components than for the higher ones.

After quantization, the two-dimensional array of transform coefficients has to be converted into a one-dimensional string to pass it to the entropy encoder. This conversion is done by scanning the array in a predetermined sequence. The thus obtained one-dimensional sequence of quantized transform coefficients is compressed to a series of number pairs called run levels. Finally, the run-level sequence is coded with binary code words of variable length (Variable Length Code, VLC). The code is optimized to assign shorter code words to most frequent run-level pairs occurring in typical video images. The resulting bitstream is multiplexed with the motion information and stored on a recording medium or transmitted to the decoder side.

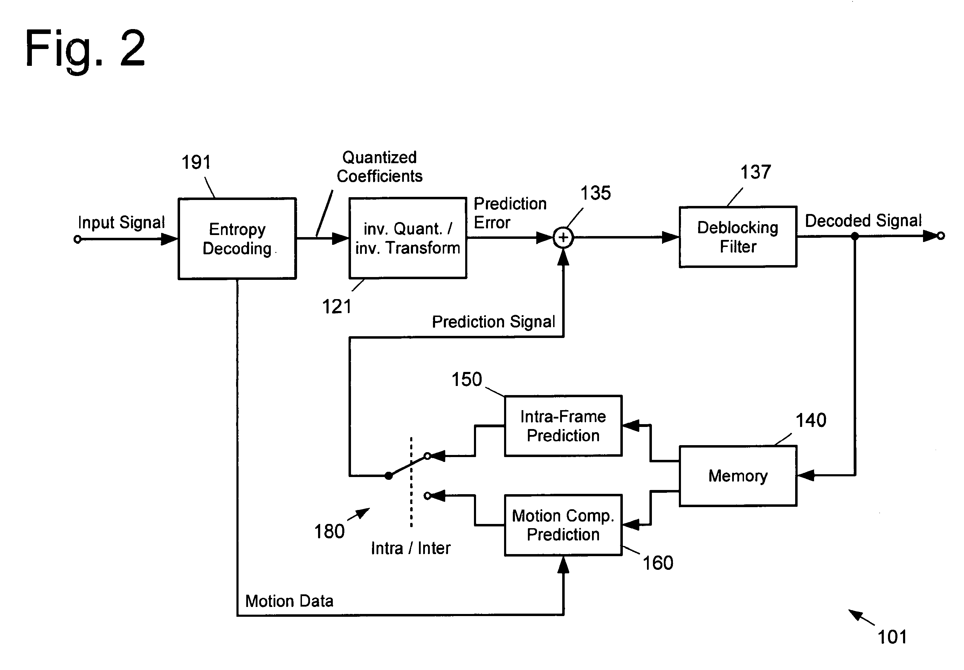

For reconstructing the encoded images at the decoder side, the encoding process is applied in reverse manner. A schematic block diagram, illustrating the configuration of the corresponding decoder, is shown in Fig. 2.

In decoder 101 of Fig. 2, first the entropy encoding of transform coefficients and motion data is reversed in an entropy decoding unit 191. This step also involves an inverse scanning in order to convert the sequence of decoded transform coefficients into a two-dimensional block of data as it is required for the inverse transformation. The decoded block of transform coefficients is then submitted to an inverse quantizer and inverse transformer 121 and the decoded motion data is sent to a motion compensated prediction unit 160. Depending on the actual value of the motion vector, interpolation of pixel values may be needed in order to perform motion compensation. The result of the inverse transformation contains prediction differences and is added by adder 135 to the prediction signal stemming from the motion compensated prediction unit 160 in Inter-mode or stemming from an Intra-frame prediction unit 150 in Intra-mode. The reconstructed image may be passed through a deblocking filter 137 and the decoded signal is stored in memory 140 to be applied to prediction units 150, 160.

As explained above, coding efficiency critically depends on prediction accuracy, which in turn depends on the accuracy of motion estimation and compensation. Motion compensation may be improved by replacing the fixed interpolation filters employed by the motion compensated prediction unit 160 by filters that adapt to the statistical properties of the video images.

So far, there are two main implementations of the adaptive interpolation filter, viz. implementations based on separable or non-separable filters. Both implementations provide improved coding efficiency, because the filters can be adapted to the invariant statistics of the image. Besides this general advantage, each implementation has its own advantages and disadvantages in terms of computational complexity and coding efficiency, which are summarized in the following:

Separable adaptive interpolation filters have a lower number of independent filter coefficients than non-separable filters, resulting in reduced computational complexity for applying and coding the filters. However, this also implies a reduced number of degrees of freedom and thus fewer possibilities to improve the prediction efficiency compared to non-separable filters. This may lead to a lower coding efficiency than with a non-separable filter.

Both implementations provide a benefit depending on the user's demand. If an implementation can spend some computational complexity by applying non-separable filtering, it can obtain optimal prediction efficiency. If an implementation has to safe computational complexity, it will apply a separable filter resulting in a possibly non-optimal prediction.

In case of adaptive filtering, the filter coefficients are not known by the decoder and therefore a transmission of the interpolation filter is necessary. In order to offer high flexibility in terms of controlling complexity and coding efficiency, the signalling of non-separable and separable filters is done at following levels: sequence level (SPS), picture level (PPS), and slice level.

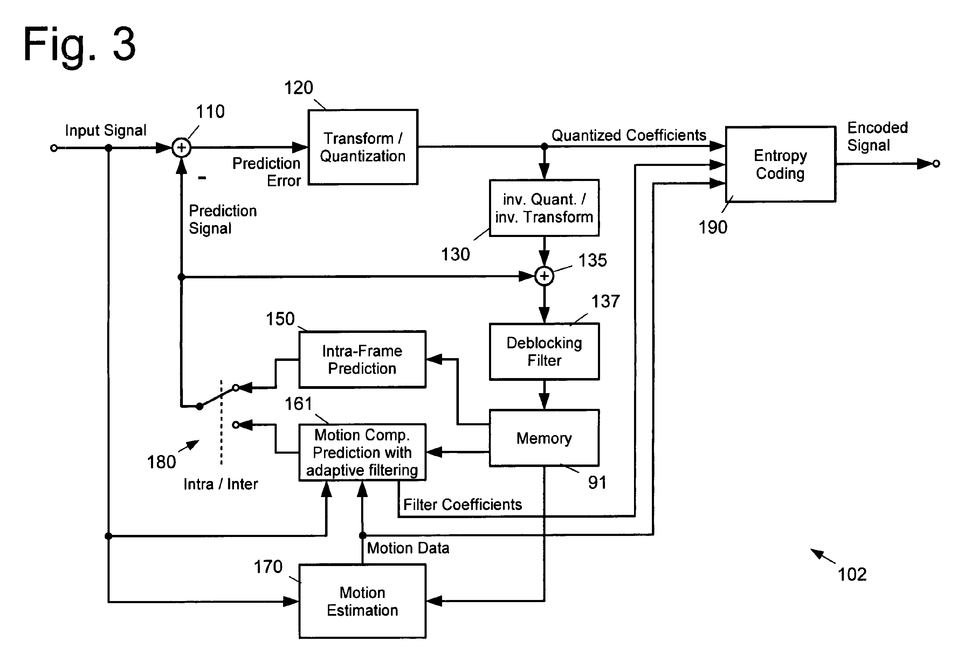

Figure 3 is a block diagram of a video encoder employing motion compensation with adaptive filtering. The block diagram of Fig. 3 is similar to that of Fig. 1, wherein like reference numerals denote like elements, a detailed description of which will be omitted.

In contrast to the block diagram of the conventional video encoder shown in Fig. 1, the motion compensated prediction unit 161 also determines the adaptive interpolation filter required for compensation. To this end, motion compensated prediction unit 161 also receives a copy of the input signal. Moreover, coefficients of the thus determined adaptive interpolation filter are transmitted to the entropy coder 190 in order to be inserted into the output bitstream.

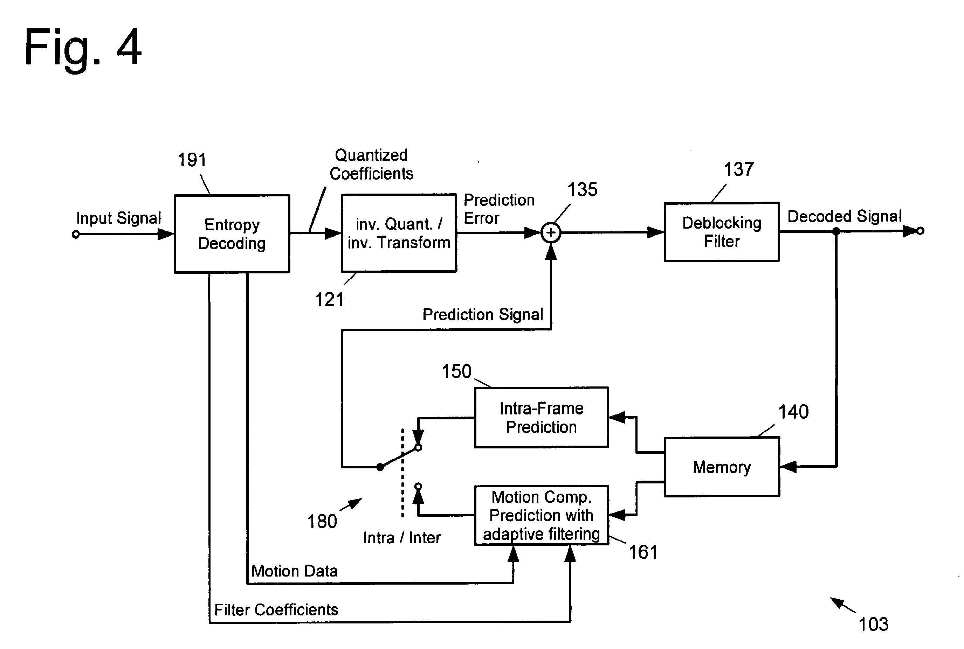

Figure 4 is a block diagram of a video decoder employing motion compensation with adaptive filtering. The block diagram of Fig. 4 is similar to that of Fig. 2, wherein like reference numerals denote like elements, a detailed description of which will be omitted. In analogy to the encoder of Fig. 3, the motion compensated prediction unit 161 applies the adaptive interpolation filter upon compensating the current image. To this end, the motion compensated prediction unit 161 receives filter coefficients decoded from the input bitstream by means of the entropy decoder 191.

DETERMINING FILTER COEFFICIENTS

In the following, a method for determining filter coefficients of adaptive interpolation filters is described.

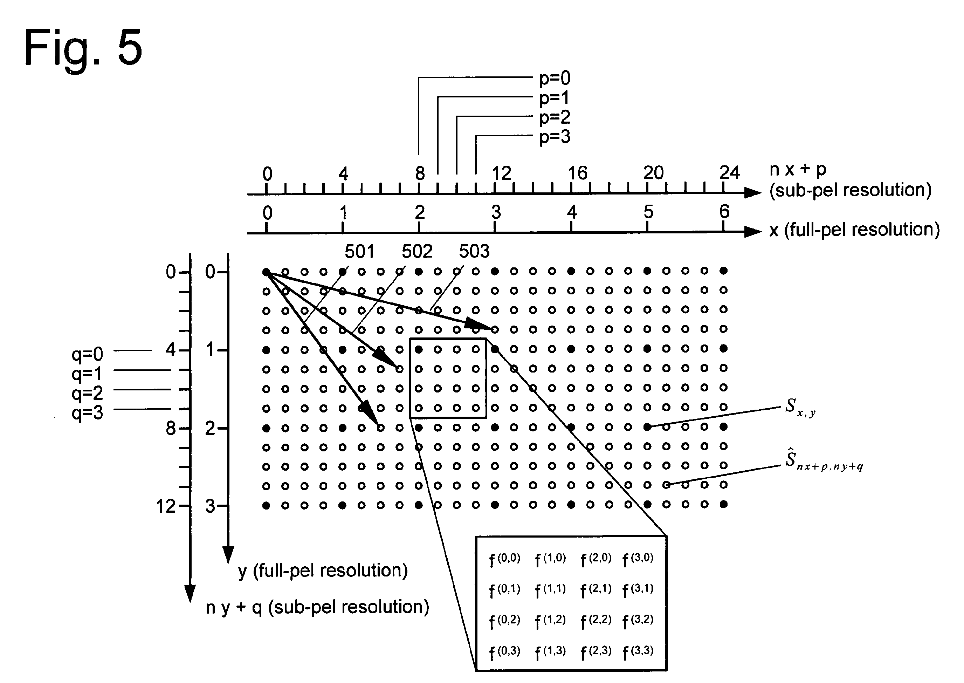

Fig. 5 is a schematic drawing of a block of video data. Filled circles denote full-pel positions, i.e. sampling points of the original image, whereas open circles indicate sub-pel positions, at which pixel values have to be interpolated. Although the following figures illustrate quarter-pel resolution, the present invention may be applied to any particular fractional-pel resolution, including half-pel, quarter-pel, eigth-pel, etc., and even different sub-pel resolutions in vertical and horizontal direction.

In the following, $n$ will denote sub-pel resolution, i.e., $n=2$ for half-pel and $n=4$ for quarter-pel resolution, etc. Moreover, the original image (or block of video data) will be denoted by $S_{x,y}$, which is the pixel value at full-pel position $(x,y)$. The corresponding horizontally and vertically interpolated image will be denoted by $\hat{S}_{nx+p,ny+q}$. Here, subpel position is denoted by $p=0,...,n-1$ and $q=0,...,n-1$ ; cf. Fig. 5. Hence, the pixel at full-pel position $(nx,ny)$ in the interpolated image corresponds to pixel $(x, y)$ in the original image.

An adaptive interpolation filter in the sense of the present application is defined as a linear operator mapping the original image to the corresponding horizontally and vertically interpolated image, viz.

$$S_{nx+p,ny+q} \;=\; \sum_{i,j} f_{i,j}^{(p,q)} S_{x-i,y-j} \,. \tag{1}$$

Here, $f_{i,j}^{(p,q)}$ are discrete filter coefficients for the interpolation filter with, for instance, $i=-2,-1,0,1,2,3$ and $j=-2,-1,0,1,2,3$ for a 6x6-tap filter. The filter coefficients do also depend on the particular sub-pel position $(p,q)$. Hence, a specific interpolation filter $f^{(p,q)}$ is defined for each sub-pel position $(p,q)$; cf. Fig. 5.

It is further requested that the interpolation filter should yield the original values at fullpel positions. Hence

$$f_{i,j}^{(0,0)} \;=\; \delta_{i,0}\cdot\delta_{j,0} \,, \tag{2}$$

with $\delta_{k,l}$ being the Kronecker-Delta, i.e. $\delta_{k,l}=1$ if $k=l$ and $\delta_{k,l}=0$ if $k\neq l$.

A displacement vector (501, 502, 503) will be denoted by $v=(v_x,v_y)$. The components $v_x$ and $v_y$ refer to fractional-pel positions. A displacement vector (503) with $v_x$ mod $n=0$ is said to point to a full-pel position in x-direction (or to indicate a full-pel translation in x-direction). A displacement vector (501, 502) with $v_x$ mod $n=1,...,(n-1)$ is said to point to a sub-pel position in x-direction (or to indicate a sub-pel translation in x-direction). A similar terminology will be used for the y-direction.

The filter coefficients $f_{i,j}^{(p,q)}$ for a given sub-pel position $(p,q)$ are now determined as follows. Let $P_{x,y}$ denote the previously decoded reference image and $v=(v_x,v_y)$ a displacement vector at sub-pel resolution that points to sub-pel position $(p,q)$, i.e., a displacement vector with $p=v_x$ mod $n$ and $q=v_y$ mod $n$. The prediction error for this displacement may thus be expressed as

$$\left(e_{p,q}\right)^2 \;=\; \sum_{x,y} \left( S_{x,y} - \sum_{i,j} f_{i,j}^{(p,q)} P_{\tilde{x}-i,\tilde{y}-j} \right)^2 \,, \tag{3}$$

with $\tilde{x}=x+[v_x/n]$ and $\tilde{y}=y+[v_y/n]$, wherein [...] denotes the floor operator that yields the largest integer smaller than the operator's argument (round-down operator). The sum over x and y is to be taken over that region of the original image for which the displacement vector is valid. This region may correspond to the macro block, for which the displacement vector has been determined. The region may also consist of a (non-connected) union of some or all macro blocks (of one or more video images) with displacement vectors that point to the same sub-pel position, i.e., displacement vectors with $v_x$ mod $n=p$ and $v_y$ mod $n=q$.

The filter coefficients $f_{i,j}^{(p,q)}$ are now determined so as to minimize the prediction error of Eq. (3). The optimization may be performed by any numerical optimization algorithm known in the art, such as gradient descent, simulated annealing, etc. However, in the present case, the optimum filter coefficients may also be determined by solving a system of linear equations that results from computing the partial derivatives of Eq. (3) with respect to the filter coefficients $f_{i,j}^{(p,q)}$ , , viz.

$$0 = \frac{\partial}{\partial f_{k,l}^{(p,q)}} \sum_{x,y} \left( S_{x,y} - \sum_{i,j} f_{i,j}^{(p,q)} P_{\tilde{x}-i,\tilde{y}-j} \right)^2 = -2 \sum_{x,y} P_{\tilde{x}-k,\tilde{y}-l} \left( S_{x,y} - \sum_{i,j} f_{i,j}^{(p,q)} P_{\tilde{x}-i,\tilde{y}-j} \right) \qquad (4)$$

If the two-dimensional interpolation filter $f^{(p,q)}$ is separable, it may be rewritten as a composition of two separate one-dimensional filters $g^{(p,q)}$ and $h^{(p,q)}$:

$$\hat{S}_{nx+p,ny+q} = \sum_j h_j^{(p,q)} \sum_i g_i^{(p,q)} S_{x-i,y-j} \qquad (5)$$

with $g_i^{(0,0)} = \delta_{i,0}$ and $h_j^{(0,0)} = \delta_{j,0}$ .

It is generally assumed that the horizontal interpolation filter $g^{(p,q)}$ is independent of the vertical sub-pel position $q$ , i.e., that $g^{(p,q)}=g^{(p)}$, and that the vertical interpolation filter does not affect the result of the interpolation on a full-pel row, i.e., that $h_j^{(p,0)}$ . In this case, the two-dimensional interpolation can be considered as a two-step process: In a first step, horizontal interpolation is performed in order to determine pixel values at sub-pel positions on a "full-pel row". In a second step, pixel values on sub-pel rows are determined by applying vertical interpolation to pixel values determined in the first step. With these assumptions, filter coefficients for $g^{(p)}$ and $h^{(p,q)}$ can readily be determined from Eqs. (3) and/or (4).

Since transmitting the coefficients of adaptive filters may result in a high additional bit-rate, the overall coding gain can be reduced due to overhead information, especially for video sequences with small spatial resolution and in case of non-separable filters. In order to reduce the side information it may be assumed that statistical properties of an image are symmetric. Thus, the filter coefficients are taken to be equal in case the distance of the corresponding full-pel positions to the current sub-pel position are equal. However, due to artefacts in the signal like aliasing or due to displacement estimation errors, the symmetry assumption may not be valid for all sequences. Thus, this may lead to a loss of coding efficiency gains due to the limited adaptation of the filter to the signal statistics.

Hence, there is a need for a universal and efficient way to apply adaptive interpolation filters and for an efficient way to signal adaptive interpolation filter elements.

According to embodiments of the present invention, a universal way to apply adaptive interpolation filters is provided that includes the usage of different filter types (separable, non-separable), filter symmetries, filter length and differential coding of filter coefficients depending on the sub-pel position (i.e. a predictive coding of filter coefficients).

EXPLOITING FILTER SYMMETRIES AND LIMITATIONS

By applying symmetric and non-symmetric interpolation filters it is possible to control the amount of overhead information that is added to the bit-stream by transmitting filter coefficients. For instance for high resolution sequences it may be useful to transmit non-symmetric filters to achieve a optimal adaptation of the filter to the signal statistics, whereas for sequences with low resolution it may be necessary to apply symmetric filters in order to reduce the amount of overhead information. Each time symmetries are exploited, the corresponding filters at different sub-pel positions are jointly optimized. This may reduce the efficiency of the prediction in case of input signals containing aliasing or due to inaccurate motion estimation. It is to be noted, that switching between symmetric and non-symmetric filters can be performed in a sub-pel position dependent manner in order to optimize accuracy of motion compensated prediction versus signalling overhead.

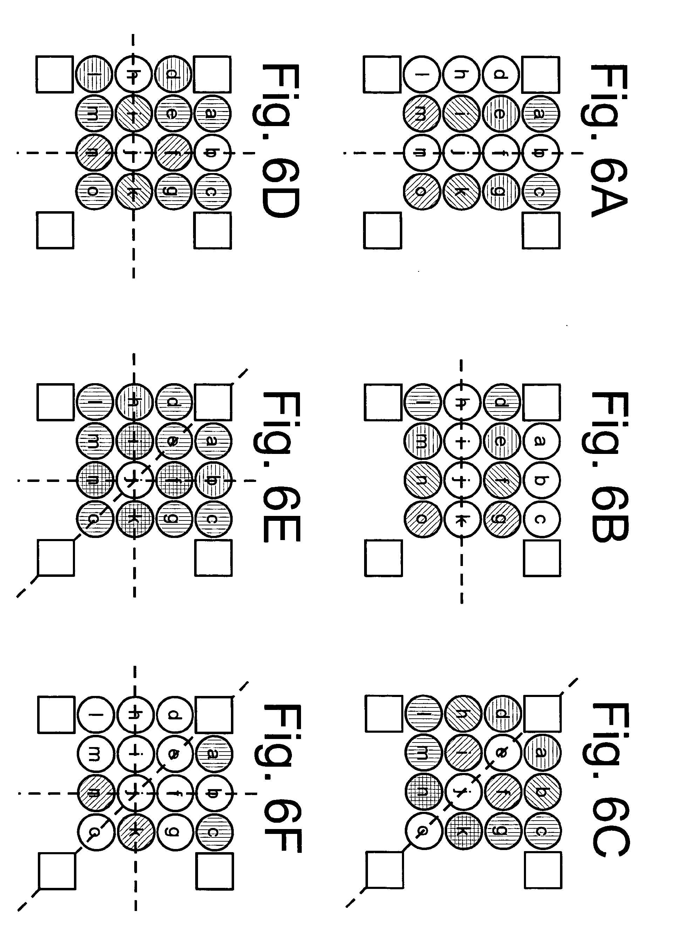

Figure 6 provides an overview over symmetry properties of the adaptive interpolation filters for $n=4$, i.e. for quarter-pel resolution. Full-pel and sub-pel positions are indicated by squares and circles, respectively. Sub-pel positions are further denoted by characters a, b, ..., o. Hatching is used to illustrate symmetries between interpolation filters at different sub-pel positions. Filter coefficients at sub-pel positions with like hatching can be derived by applying a suitable symmetry operation, as detailed below.

Figure 6A illustrates interpolation filters that are symmetric with respect to a vertical axis (dashed line). In this case, filter coefficients are of the form

$$f_{i,j}^{(p,q)} = f_{1-i,j}^{(n-p,q)}, \tag{6}$$

i.e., filter coefficients of an interpolation filter that is specific for sub-pel position $(p,q)$ can be derived from filter coefficients of an interpolation filter that is specific for a symmetric sub-pel position $(n-p,q)$ by applying an appropriate symmetry operation, which is a reflection with respect to the vertical axis, viz. $(i,j) \rightarrow (1-i,j)$. It is to be noted that filter coefficients of an interpolation filter that is specific for a sub-pel position located on the mirror axis are symmetric to themselves, viz. $f_{i,j}^{(n/2,q)} = f_{1-i,j}^{(n/2,q)}$, thus reducing the number of independent coefficients that have to be determined.

Figure 6B illustrates interpolation filters that are symmetric with respect to a horizontal axis (dashed line). In this case, filter coefficients are of the form

$$f_{i,j}^{(p,q)} = f_{i,1-j}^{(p,n-q)}, \tag{7}$$

i.e., filter coefficients of an interpolation filter that is specific for sub-pel position $(p,q)$ can be derived from filter coefficients of an interpolation filter that is specific for a symmetric sub-pel position $(p,n-q)$ by applying an appropriate symmetry operation, which is a reflection with respect to the horizontal axis, viz. $(i,j) \rightarrow (i,1-j)$. It is to be noted that filter coefficients of an interpolation filter that is specific for a sub-pel position located on the mirror axis are symmetric to themselves, viz. $f_{i,j}^{(p,n/2)} = f_{i,1-j}^{(p,n/2)}$, thus reducing the number of independent coefficients that have to be determined.

Figure 6C illustrates interpolation filters that are symmetric with respect to a diagonal axis (dashed line). In this case, filter coefficients are of the form

$$f_{i,j}^{(p,q)} = f_{j,i}^{(q,p)}, \tag{8}$$

i.e., filter coefficients of an interpolation filter that is specific for sub-pel position $(p,q)$ can be derived from filter coefficients of an interpolation filter that is specific for a symmetric sub-pel position $(q,p)$ by applying an appropriate symmetry operation, which is a reflection with respect to the diagonal axis, viz. $(i,j) \rightarrow (j,i)$. It is to be noted that filter coefficients of an interpolation filter that is specific for a sub-pel position located on the mirror axis are symmetric to themselves, viz. $f_{i,j}^{(p,p)} = f_{j,i}^{(p,p)}$, thus reducing the number of independent coefficients that have to be determined.

Figs. 6D and 6E illustrate that the mirror symmetries described above may also be combined. Figs. 6D shows the situation where the interpolation filters are symmetric with respect to a vertical and a horizontal axis. Figs. 6E shows the situation where the interpolation filters are symmetric with respect to a vertical, a horizontal, and a diagonal axis.

Each of the above symmetries or combinations thereof may be employed in order to reduce the number of independent filter coefficients that have to be determined and signalled, thus improving the robustness of the determination process and reducing the signalling overhead.

It is also to be noted that any of the above symmetries need not necessarily apply for all sub-pel specific interpolation filters. Rather, each of the above symmetries may be applied to only a subset of the adaptive interpolation filters, for instance only to certain sub-pel positions, such as off-diagonal positions with $p \neq q$. Further, only individual pairs of sub-pel specific interpolation filters may be assumed to be symmetric according to any of the above symmetry relations. This is illustrated in Fig. 6F, where interpolation filters for sub-pel positions $a$ and $c$ are symmetric as well as those for sub-pel positions $k$ and $n$.

Apart from symmetries, other limitations may be employed in order to reduce the number of independent filter coefficients of the adaptive interpolation filter. It may for instance be assumed that the two-dimensional adaptive interpolation filter reduces to a one-dimensional interpolation filter on full-pel columns ($p$=0) and/or on full-pel rows ($q$=0). The adaptive interpolation filter is thus of the form

$$f_{i,j}^{(0,q)} = \delta_{i,0} h_j^{(q)} \tag{9}$$

and/or

$$f_{i,j}^{(p,0)} = g_i^{(p)} \delta_{j,0} . \tag{10}$$

Another frequently employed limitation is the assumption of separability, i.e., a limitation to two-dimensional interpolation filters that can be decomposed into two one-dimensional interpolation filters. A separable adaptive interpolation filter is of the form

$$f_{i,j}^{(p,q)} = g_i^{(p,q)} h_j^{(p,q)} , \tag{11}$$

where $g_i^{(p,q)}$ and $h_j^{(p,q)}$ denote filter coefficients of a horizontal and a vertical one-dimensional interpolation filter, respectively. In case of a 6x6 tap adaptive interpolation filter the number of independent filter coefficients reduces from 6*6=36 coefficients per sub-pel position for a non-separable filter to 6+6=12 coefficients per sub-pel position for the two one-dimensional filters.

The number of independent filter coefficients may be further reduced by assuming the horizontal and/or the vertical one-dimensional interpolation filters to be invariant with respect to sub-pel translations. Hence,

$$f_{i,j}^{(p,q)} = g_i^{(p,q)} h_j^{(q)} \tag{12}$$

and/or

$$f_{i,j}^{(p,q)} = g_i^{(p)} h_j^{(p,q)} , \tag{13}$$

where $g_i^{(p)}$ and $h_j^{(q)}$ denote filter coefficients of a horizontal and a vertical one-dimensional interpolation filter that is independent of the vertical and horizontal sub-pel position, respectively.

It is also to be noted that the above limitations may also be combined with each other as well as with the above symmetry properties in order to further reduce the signalling overhead. A particularly preferred combination of the above limitations is a separable adaptive interpolation filter with one-dimensional interpolation on full-pel rows and columns together with a vertically translation invariant horizontal interpolation filter, viz.

$$f_{i,j}^{(p,q)} = g_i^{(p)} h_j^{(p,q)}, \quad h_j^{(p,0)} = \delta_{j,0} . \tag{14}$$

A filter of this form can be estimated from video data by determining the horizontal interpolation filter from the input video data in a first step, applying the thus determined horizontal interpolation filter and determining the vertical interpolation filter from the horizontally interpolated video data in a second step.

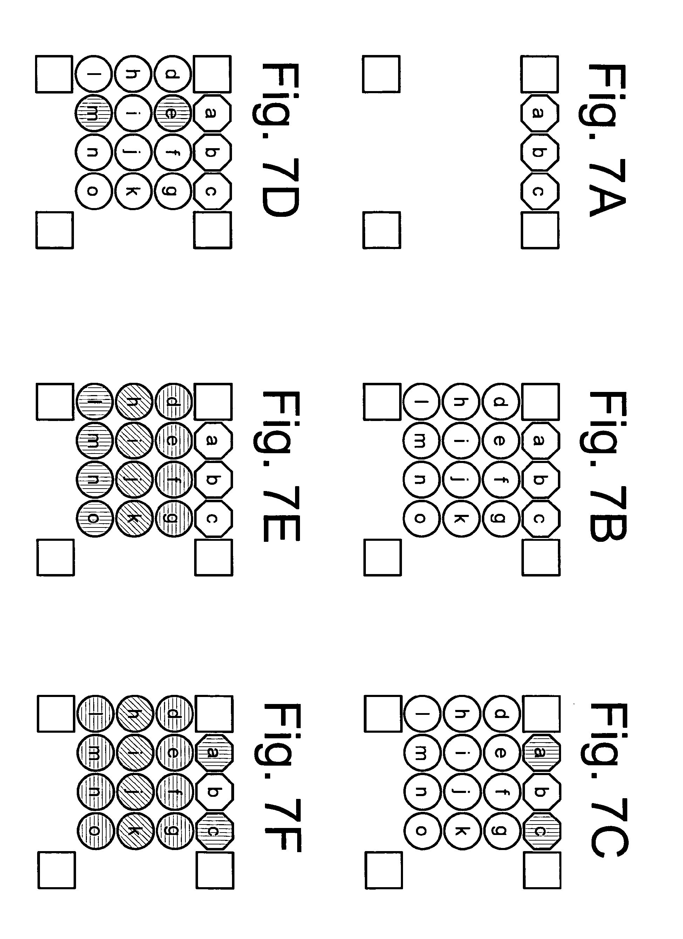

This method is illustrated in Fig. 7A and 7B, wherein octagons indicate the sub-pel positions a, b, and c, whose filters are calculated in a first step. Circles in Fig. 7B indicate the remaining sub-pel positions, where interpolation filters are determined in the second step.

Figure 7C is an example of the above separable adaptive interpolation filter with symmetric filters at sub-pel positions *a* and *c*.

Figure 7D is an example of the above separable adaptive interpolation filter with symmetric filters at sub-pel positions *e* and *m*.

Figure 7E illustrates the above separable adaptive interpolation filter with the vertical interpolation filter $h_j^{(q)}$ being in addition invariant with respect to horizontal translation as in Eq. (12).

Figure 7F is a combination of Fig. 7C and Fig. 7E, wherein the adaptive interpolation filter consists of only 4 independent sub-pel specific one-dimensional interpolation filters.

By employing any of the above described symmetries and limitations or combinations thereof, the properties of the interpolation filter can be set as needed. The possibility of reducing the number of independent filter coefficients may for instance be employed to optimize the trade-off between a faithful interpolation filter that reduced the prediction error as far as possible versus the signalling overhead caused by encoding a lot of independent filter coefficients. To this end, the filter properties may for instance be set in accordance with the image content, in particular in accordance with the amount of motion present in the images. The filter properties may also be set in accordance with the spatial image resolution or depending on the compression ratio that is to be achieved. Filter properties may for instance be selected from a finite number of candidate properties, depending on which of the candidate properties yields the best compression ratio.

Further, filter properties may be set automatically, as described above, or manually by allowing a user to select the most appropriate filter properties. Setting of the filter properties may occur only once per movie or repetitively on a slice-by-slice or sequence-by-sequence basis. However, the filter properties may also be set more or less frequently without deviating from the present invention.

SIGNALING

In order to allow the decoder to decode the received encoded video data, the filter coefficients have to be signalled. Coding efficiency can be optimized if the filter coefficients are encoded together with the encoded video data by exploiting redundancies due to the set filter properties within the set of filter coefficients. For example, symmetric interpolation filters for distinct sub-pel positions need to be encoded only once. Similarly, interpolation filters that have filter coefficients symmetric to themselves can be efficiently encoded by encoding only filter coefficients that cannot be reconstructed from previously encoded filter coefficients. More generally, any limitation to the interpolation filter that reduces the number of independent filter coefficients can be exploited by encoding only those filter coefficients that cannot be derived from previously encoded coefficients in accordance with said limitation. Separable interpolation filters, for instance, are preferably encoded by encoding filter coefficients of the two one-dimensional interpolation filters rather than encoding the larger number of coefficients of the two-dimensional interpolation filter itself.

In any case, the filter properties that are exploited for reducing the signalling overhead have also to be signalled to the decoder. This may be achieved either by means of explicit or implicit signalling.

Explicit signalling means that the filter properties are explicitly encoded together with the encoded video data. This provides greatest flexibility with respect to setting the desired properties at the price of additional signalling overhead. Implicit signalling, on the other hand, means that information on the filter propertied has to be derived by the decoder based on prior knowledge of how the encoder selects filter properties. For example, the encoder may transmit only one interpolation filter of each pair of symmetric interpolation filters and the decoder may judge that any non-transmitted interpolation filter is symmetric to a corresponding one of the transmitted filters. Obviously, this form of signalling is less flexible as it requires an agreement between the encoder and the decoder about the symmetries that may actually be employed. However, signalling overhead is reduced to a minimum.

In the following, concrete signalling examples are provided together with an exemplary syntax elements on slice level. It is to be understood, that these examples are for illustrative purpose only and do not imply any restriction of the scope of the present invention.

According to a first signalling example, only one flag is needed per filter type to signal if a symmetric filter is applied or not. For each filter type (e.g. separable or non-separable) one specific symmetry pattern is supported that is fixed and known by encoder and decoder. As only one symmetry pattern is supported, this approach offers limited flexibility to control the trade-off between overhead bit-rate for filter coefficients and resulting prediction efficiency.

Exemplary syntax elements on slice level with signalling of symmetries for non-separable and separable filters are shown in the following listing:

| slice_header( ) { | C | Descriptor |
|---|---|---|
| first_mb_in_slice | 2 | ue(v) |
| slice_type | 2 | ue(v) |
| pic_parameter_set_id | 2 | ue(v) |
| if( separate_colour_plane_flag == 1 ) | | |
| colour_plane_id | 2 | u(2) |
| frame_num | 2 | u(v) |
| if( !frame_mbs_only_flag ) { | | |
| field_pic_flag | 2 | u(1) |
| if( field_pic_flag ) | | |
| bottom_field_flag | 2 | u(1) |
| } | | |
| if( nal_unit_type == 5 ) | | |
| idr_pic_id | 2 | ue(v) |
| if( pic_order_cnt_type == 0 ) { | | |
| pic_order_cnt_lsb | 2 | u(v) |
| if( pic_order_present_flag && !field_pic_flag ) | | |
| delta_pic_order_cnt_bottom | 2 | se(v) |
| } | | |
| if( pic_order_cnt_type == 1 && !delta_pic_order_always_zero_flag ) { | | |
| delta_pic_order_cnt[ 0 ] | 2 | se(v) |
| if( pic_order_present_flag && !field_pic_flag ) | | |

.

| | | |
|---|---|---|
| delta_pic_order_cnt[ 1 ] | 2 | se(v) |
| } | | |
| if( redundant_pic_cnt_present_flag ) | | |
| redundant_pic_cnt | 2 | ue(v) |
| if( slice_type == B ) | | |
| direct_spatial_mv_pred_flag | 2 | u(1) |
| if( slice_type == P \|\| slice_type == SP \|\| slice_type == B ) { | | |
| num_ref_idx_active_override_flag | 2 | u(1) |
| if( num_ref_idx_active_override_flag ) { | | |
| num_ref_idx_l0_active_minus1 | 2 | ue(v) |
| if( slice_type == B ) | | |
| num_ref_idx_l1_active_minus1 | 2 | ue(v) |
| } | | |
| } | | |
| ref_pic_list_reordering( ) | 2 | |
| if( ( weighted_pred_flag && ( slice_type == P \|\| slice_type == SP ) ) \|\| ( weighted_bipred_idc == 1 && slice_type == B )) | | |
| pred_weight_table( ) | 2 | |
| if( nal_ref_idc != 0 ) | | |
| dec_ref_pic_marking( ) | 2 | |
| if( entropy_coding_mode_flag && slice_type != I && slice_type != SI ) | | |
| cabac_init_idc | 2 | ue(v) |
| slice_qp_delta | 2 | se(v) |
| if( slice_type == SP \|\| slice_type == SI ) { | | |
| if( slice_type == SP ) | | |
| sp_for_switch_flag | 2 | u(1) |
| slice_qs_delta | 2 | se(v) |
| } | | |
| if( deblocking_filter_control_present_flag ) { | | |
| disable_deblocking_filter_idc | 2 | ue(v) |
| if( disable_deblocking_filter_idc != 1 ) { | | |
| slice_alpha_c0_offset_div2 | 2 | se(v) |
| slice_beta_offset_div2 | 2 | se(v) |
| } | | |
| } | | |
| if( num_slice_groups_minus1 > 0 && slice_group_map_type >= 3 && slice_group_map_type <= 5) | | |
| slice_group_change_cycle | 2 | u(v) |
| if( slice_type == P \|\| slice_type == B ) { | | |
| apply_adaptive_filter | 2 | u(1) |
| if( apply_adaptive_filter == 1 ) { | | |
| slice_filter_type | 2 | u(1) |
| apply_symmetric_filter | 2 | u(1) |
| use_all_subpel_positions | 2 | u(1) |
| if(!use_all_subpel_positions) | | |
| positions_pattern | 2 | ue(v) |
| if( slice_filter_type == 0) /* non-separable filter | | |
| for( sub_pel = 0; sub_pel < max_sub_pel_pos; sub_pel++ ) | | |
| if( use_all_subpel_positions \|\| positions_pattern & ( 1 << sub_pel ) ) ) | | |
| for( i = 0; i < filter_length * filter_length; i++ ) | | |
| filter_coeff[ sub_pel ][ i ] | 2 | se(v) |
| else../* separable filter */ | | |
| for( sub_pel = 0; sub_pel < max_sub_pel_pos; sub_pel++ ) | | |

| | C | Descriptor |
|---|---|---|
| if( use_all_subpel_positions \|\| positions_pattern & ( 1 << sub_pel ) ) ) | | |
| for( j = 0; j < 2; j++ ) | | |
| for( i = 0; i < filter_length; i++ ) | | |
| **filter_coeff[ sub_pel ][ j ][ i ]** | 2 | se(v) |
| } | | |
| } | | |
| } | | |

Here, apply_adaptive_filter is 0 for a fixed filter and 1 for an adaptive filter; slice_filter_type (slice level adaptive filter) is 0 for a non-separable filter and 1 for a separable filter; apply_symmetric_filter is 0 for a non-symmetric filter and 1 for a symmetric filter; use_all_subpel_positions is 0 if not all sub-pel positions are calculated by adaptive filters and 1 if all sub-pel positions are calculated by adaptive filters; positions_pattern is a binary mask signalling the sub-pel positions where adaptive filters are applied with 0 for fixed filter of MPEG-4 AVC / H.264 and 1 for an adaptive filter.

The value of max_sub_pel_pos depends on the value of apply_symmetric_filter. In case of a non-symmetric filter, max_sub_pel_pos equals to the total number of sub-pel positions (e.g. for quarter-pel motion vector resolution: max_sub_pel_pos = 15). In case of a symmetric filter, max_sub_pel_pos is smaller than the total number of sup-pel positions depending on the amount of symmetries that is exploited.

If apply_symmetric_filter equals to 1, the decoder restores the missing filter coefficients from the transmitted filter coefficients.

The second signalling example refers to explicit signalling of filter properties. In this example, explicit signalling of symmetries is employed in order to offer a high flexibility for controlling the trade-off between overhead bit-rate for filter coefficients and resulting prediction efficiency. All kinds of symmetries are signalled to the decoder. This concept may lead to increased overhead bit-rate for signalling of the corresponding symmetries.

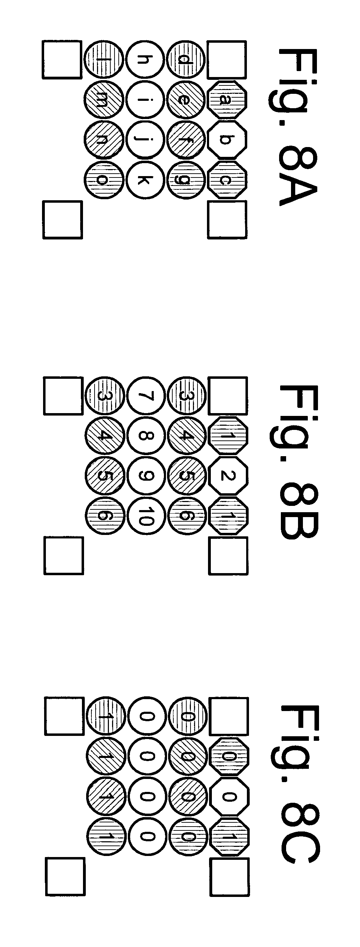

According to the second signalling example, a filter id is assigned to each distinct filter. This allows for all kinds of symmetries and for an efficient way of signalling. In Figs. 8 different filters have to be transmitted for the chosen symmetry pattern. To each sub-pel position from "a" to "o" the corresponding filter id is transmitted (here: {1, 2, 1, 3, 4, 5, 6, 7, 8, 9, 10, 3, 4, 5, 6}). The value of 0 is reserved for the non-adaptive filter e.g. of MPEG-4 AVC / H.264.

For example: Filter id 1 is assigned to sub-pel positions a and c with filter coefficients {coeff1, coeff2, coeff3, coeff4, coeff5, coeff6}. At sub-pel position a the filter is directly applied whereas at sub-pel position c, the filter is mirrored ( = {coeff6, coeff5, coeff4, coeff3, coeff2, coeff1}) and then applied. To decide whether a filter has to be mirrored or not, a decoder has to find the first occurrence of the current filter id in the scan. E.g. to sub-pel position I the filter id 3 is assigned; the first occurrence of filter id 3 was at position d. Depending on the distance to the next full-pel position (or sub-pel position that was calculated in the first step (hexagons)), it is obvious that the filter at position I has to be a mirrored version of the filter at position d.

The following table shows exemplary syntax elements for explicit signalling of filters and filter symmetries in case of prediction with quarter-pel precision and 6-tap filter length according to the second signalling example. In this example, signalling is done on slice level. It should be noted that it is also possible to do the signalling on sequence or picture level. Furthermore it is also possible to transmit the filter id at sequence level (symmetry pattern would be the same throughout the whole sequence) and to update the assigned filters on picture or on slice level. Any other combination can also be considered without departing from the present invention.

| slice_header( ) { | C | Descriptor |
|---|---|---|
| **first_mb_in_slice** | 2 | ue(v) |
| **slice_type** | 2 | ue(v) |
| **pic_parameter_set_id** | 2 | ue(v) |
| if( separate_colour_plane_flag == 1 ) | | |
| **colour_plane_id** | 2 | u(2) |
| **frame_num** | 2 | u(v) |

| | | |
|---|---|---|
| if( !frame_mbs_only_flag ) { | | |
|   field_pic_flag | 2 | u(1) |
|   if( field_pic_flag ) | | |
|     bottom_field_flag | 2 | u(1) |
| } | | |
| if( nal_unit_type == 5 ) | | |
|   idr_pic_id | 2 | ue(v) |
| if( pic_order_cnt_type == 0 ) { | | |
|   pic_order_cnt_lsb | 2 | u(v) |
|   if( pic_order_present_flag && !field_pic_flag ) | | |
|     delta_pic_order_cnt_bottom | 2 | se(v) |
| } | | |
| if( pic_order_cnt_type == 1 && !delta_pic_order_always_zero_flag ) { | | |
|   delta_pic_order_cnt[ 0 ] | 2 | se(v) |
|   if( pic_order_present_flag && !field_pic_flag ) | | |
|     delta_pic_order_cnt[ 1 ] | 2 | se(v) |
| } | | |
| if( redundant_pic_cnt_present_flag ) | | |
|   redundant_pic_cnt | 2 | ue(v) |
| if( slice_type == B ) | | |
|   direct_spatial_mv_pred_flag | 2 | u(1) |
| if( slice_type == P || slice_type == SP || slice_type == B ) { | | |
|   num_ref_idx_active_override_flag | 2 | u(1) |
|   if( num_ref_idx_active_override_flag ) { | | |
|     num_ref_idx_l0_active_minus1 | 2 | ue(v) |
|     if( slice_type == B ) | | |
|       num_ref_idx_l1_active_minus1 | 2 | ue(v) |
|     } | | |
|   } | | |
| ref_pic_list_reordering( ) | 2 | |
| if( ( weighted_pred_flag && ( slice_type == P || slice_type == SP ) ) || ( weighted_bipred_idc == 1 && slice_type == B ) ) | | |
|   pred_weight_table( ) | 2 | |
| if( nal_ref_idc != 0 ) | | |
|   dec_ref_pic_marking( ) | 2 | |
| if( entropy_coding_mode_flag && slice_type != I && slice_type != SI ) | | |
|   cabac_init_idc | 2 | ue(v) |
| slice_qp_delta | 2 | se(v) |
| if( slice_type == SP || slice_type == SI ) { | | |
|   if( slice_type == SP ) | | |
|     sp_for_switch_flag | 2 | u(1) |
|   slice_qs_delta | 2 | se(v) |
| } | | |
| if( deblocking_filter_control_present_flag ) { | | |
|   disable_deblocking_filter_idc | 2 | ue(v) |
|   if( disable_deblocking_filter_idc != 1 ) { | | |
|     slice_alpha_c0_offset_div2 | 2 | se(v) |
|     slice_beta_offset_div2 | 2 | se(v) |
|   } | | |
| } | | |
| if( num_slice_groups_minus1 > 0 && slice_group_map_type >= 3 && slice_group_map_type <= 5) | | |
|   slice_group_change_cycle | 2 | u(v) |
| if( slice_type == P || slice_type == B ) { | | |

| | | |
|---|---|---|
| **apply_adaptive_filter** | 2 | u(1) |
| if( apply_adaptive_filter == 1 ) { | | |
| **slice_filter_type** | 2 | u(1) |
| for( sub_pel = 0; sub_pel < 15; sub_pel ++ ) | | |
| . **filter_id [sub_pel]** | 2 | ue(v) |
| if( slice_filter_type == 0) /* non-separable filter | | |
| for( filter_num = 0; filter_num < max_filter_num; filter_num++ ) { | | |
| **filter_length[filter_num]** | 2 | ue(v) |
| for( i = 0; i < filter_length[filter_num] * filter_length[filter_num]; i++ ) | | |
| **filter_coef[ filter_num ][ i ]** | 2 | se(v) |
| } | | |
| else../* separable filter */ | | |
| for( filter_num = 0; filter_num < max_filter_num; filter_num++ ) { | | |
| **filter_length[filter_num]** | 2 | ue(v) |
| for( j = 0; j < 2; j++ ) | | |
| for( i = 0; i < filter_length[filter_num]; i++ ) | | |
| **filter_coef[ filter_num ][ j ][ i ]** | 2 | se(v) |
| } | | |
| } | | |
| } | | |
| } | | |

Here, apply_adaptive_filter is 0 for a fixed filter and 1 for an adaptive filter; slice_filter_type (slice level adaptive filter) is 0 for a non-separable filter and 1 for a separable filter; filter_id assigns corresponding filter to each sub-pel position; filter_length [filter_num] signals the length of the filter and addresses filter symmetries as described above; max_filter_num signals the maximum number of filters that have to be transmitted (here: 10) and thus equals to the maximum value of filter id.

According to a third signalling example it is besides the signalling described above further possible to transmit a bit-mask indicating symmetry or non-symmetry for each sub-pel position (cf. Fig. 8C). Again, 10 filters have to be transmitted in addition to the symmetry mask ({0, 0, 1, 0, 0, 0, 0, 0, 0, 0, 0, 1, 1, 1, 1}). The filters are transmitted in ascending order from sub-pel position a to sub-pel position o. The value of 1 in the symmetry mask signals that no new filter was transmitted for the current sub-pel position. For example, if the symmetry mask signals the value of 1 at sub-pel position c (cf. Fig. 8C), the decoder knows that it has to use the mirrored version of the filter assigned to position a. For position l it has to apply the mirrored version of the filter for position d.

To realize this concept, both the encoder and the decoder have to use the same filter pairs if symmetry is signalled at a certain sub-pel position (e.g.:c → a, l → d, m → e, ...). That limits the flexibility of the design to the defined symmetry pairs, but reduces the overhead compared the described explicit signalling of symmetries. But still it offers more flexibility than the implicit signalling of symmetries described in the first signalling example.

Exemplary syntax for the third signalling example is shown in the following listing.

| slice_header( ) { | C | Descriptor |
|---|---|---|
| first_mb_in_slice | 2 | ue(v) |
| slice_type | 2 | ue(v) |
| pic_parameter_set_id | 2 | ue(v) |
| if( separate_colour_plane_flag = = 1 ) | | |
| colour_plane_id | 2 | u(2) |
| frame_num | 2 | u(v) |
| if( !frame_mbs_only_flag ) { | | |
| field_pic_flag | 2 | u(1) |
| if( field_pic_flag ) | | |
| bottom_field_flag | 2 | u(1) |
| } | | |
| if( nal_unit_type = = 5 ) | | |
| idr_pic_id | 2 | ue(v) |
| if( pic_order_cnt_type = = 0 ) { | | |
| pic_order_cnt_lsb | 2 | u(v) |
| if( pic_order_present_flag && !field_pic_flag ) | | |
| delta_pic_order_cnt_bottom | 2 | se(v) |
| } | | |
| if( pic_order_cnt_type = = 1 && !delta_pic_order_always_zero_flag ) { | | |
| delta_pic_order_cnt[ 0 ] | 2 | se(v) |
| if( pic_order_present_flag && !field_pic_flag ) | | |
| delta_pic_order_cnt[ 1 ] | 2 | se(v) |
| } | | |
| if( redundant_pic_cnt_present_flag ) | | |
| redundant_pic_cnt | 2 | ue(v) |
| if( slice_type = = B ) | | |
| direct_spatial_mv_pred_flag | 2 | u(1) |
| if( slice_type = = P || slice_type = = SP || slice_type = = B ) { | | |
| num_ref_idx_active_override_flag | 2 | u(1) |
| if( num_ref_idx_active_override_flag ) { | | |
| num_ref_idx_l0_active_minus1 | 2 | ue(v) |

| | 2 | |
|---|---|---|
| if( slice_type = = B ) | | |
| **num_ref_idx_l1_active_minus1** | 2 | ue(v) |
| } | | |
| } | | |
| ref_pic_list_reordering( ) | 2 | |
| if( ( weighted_pred_flag && ( slice_type = = P || slice_type = = SP ) ) || ( weighted_bipred_idc = = 1 && slice_type = = B ) ) | | |
| pred_weight_table( ) | 2 | |
| if( nal_ref_idc != 0 ) | | |
| dec_ref_pic_marking( ) | 2 | |
| if( entropy_coding_mode_flag && slice_type != I && slice_type != SI ) | | |
| **cabac_init_idc** | 2 | ue(v) |
| **slice_qp_delta** | 2 | se(v) |
| if( slice_type = = SP || slice_type = = SI ) { | | |
| if( slice_type = = SP ) | | |
| **sp_for_switch_flag** | 2 | u(1) |
| **slice_qs_delta** | 2 | se(v) |
| } | | |
| if( deblocking_filter_control_present_flag ) { | | |
| **disable_deblocking_filter_idc** | 2 | ue(v) |
| if( disable_deblocking_filter_idc != 1 ) { | | |
| **slice_alpha_c0_offset_div2** | 2 | se(v) |
| **slice_beta_offset_div2** | 2 | se(v) |
| } | | |
| } | | |
| if( num_slice_groups_minus1 > 0 && slice_group_map_type >= 3 && slice_group_map_type <= 5) | | |
| **slice_group_change_cycle** | 2 | u(v) |
| if( slice_type = = P || slice_type = = B ) { | | |
| **apply_adaptive_filter** | 2 | u(1) |
| if( apply_adaptive_filter = = 1 ) { | | |
| **slice_filter_type** | 2 | u(1) |
| **symmetry_mask** | 2 | u(15) |
| if( slice_filter_type = = 0) /* non-separable filter | | |
| for( filter_num = 0; filter_num < max_filter_num; filter_num++ ) { | | |
| **filter_length[filter_num]** | 2 | ue(v) |
| for( i = 0; i < filter_length[filter_num] * filter_length[filter_num]; i++ ) | | |
| **filter_coef[ filter_num ][ i ]** | 2 | se(v) |
| } | | |
| else../* separable filter */ | | |
| for( filter_num = 0; filter_num < max_filter_num; filter_num++ ) { | | |
| **filter_length[filter_num]** | 2 | ue(v) |
| for( j = 0; j < 2; j++ ) | | |
| for( i = 0; i < filter_length[filter_num]; i++ ) | | |
| **filter_coef[ filter_num ][ j ][ i ]** | 2 | se(v) |
| } | | |
| } | | |
| } | | |
| } | | |

Here, apply_adaptive_filter is 0 for a fixed filter and 1 for an adaptive filter; slice_filter_type (slice level adaptive filter) is 0 for a non-separable filter and 1 for a separable filter; symmetry_mask is a binary pattern signalling symmetries, wherein the MSB signals mirroring for sub-pel position a and the LSB signals mirroring for sub-pel position o; filter_length [filter_num] signals the length of the filter and addresses the above described filter symmetries.

The value of max_filter_num specifies the number of filters that have to be transmitted (here: 10). max_filter_num equals to 15 minus the number of signalled symmetries in symmetry_mask.

A fourth signalling example refers to the filter properties described above in conjunction with Eqs. (6) - (14). An excerpt of exemplary syntax for this signaling example is shown in the following listing.

| slice_header( ) { | C | Descriptor |
|---|---|---|
| ... | | |
| if( num_slice_groups_minus1 > 0 && | | |
| slice_group_map_type >= 3 && slice_group_map_type <= 5) | | |
| slice_group_change_cycle | 2 | u(v) |
| if( slice_type == P \|\| slice_type == B ) { | | |
| apply_adaptive_filter | 2 | u(1) |
| if( apply_adaptive_filter == 1 ) { | | |
| filter_type | 2 | ue(v) |
| symmetry_type | 2 | ue(v) |
| full_pel_row_column_interpolation_type | 2 | u(2) |
| if(filter_type == 0) /* non-separable filter | | |
| for( filter_num = 0; filter_num < max_filter_num; filter_num++ ) { | | |
| filter_length[filter_num] | 2 | ue(v) |
| for( i = 0; i < filter_length[filter_num] * filter_length[filter_num]; i++ ) | | |
| filter_coef[ filter_num ][ i ] | 2 | se(v) |
| } | | |
| else../* separable filter */ | | |
| for( filter_num = 0; filter_num < max_filter_num; filter_num++ ) { | | |
| filter_length[filter_num] | 2 | ue(v) |
| for( j = 0; j < 2; j++ ) | | |
| for( i = 0; i < filter_length[filter_num]; i++ ) | | |
| filter_coef[ filter_num ][ j ][ i ] | 2 | se(v) |
| } | | |
| } | | |
| } | | |
| } | | |

Here, apply_adaptive_filter is 0 for a fixed filter and 1 for an adaptive filter; filter_type is 0 for a non-separable filter, 1 for a separable filter (eq. 11), 2 for a separable filter with horizontally translation invariant vertical interpolation filter (eq. 12), 3 for a separable filter with vertically translation invariant horizontal interpolation filter (eq. 13), 4 for a separable filter with 1 D interpolation on full-pel rows/columns and vertically translation invariant horizontal interpolation filter (eq. 14); symmetry type is 0 for a non symmetric filter, 1 for a horizontally symmetric filter (eq. 6), 2 for a vertically symmetric filter (eq. 7), 3 for a diagonally symmetric filter (eq. 8), 4 for a diagonally symmetric filter for p <> q (eq. 8 with p <> q); full_pel_row_column_interpolation_type is 0 for 2D interpolation, 1 for 1D interpolation on full-pel columns (eq. 6), 2 for 1 D interpolation on full-pel rows (eq. 7), 3 for 1D interpolation on full-pel columns and full-pel rows; filter_length [filter_num] signals the length of the filter; filter_coef contains quantized filter coefficients; max_filter_num is the number of filters that are transmitted and depends on filter type and symmetry.

According to an embodiment of the present invention, switching between non-separable and separable filters can be performed in a sub-pel position dependent manner. In case of global motion, most of the motion vectors inside one picture point to one specific sub-pel position. Therefore it is useful to obtain the highest prediction efficiency for this sub-pel position by applying a non-separable filter without exploitation of symmetries there. For all other sub-pel positions (in case of local motion) it may be efficient to apply separable filters only in order to keep the overhead bit-rate as well as the complexity of the filtering at a low level.

This sub-pel position dependent signalling of separable and non-separable filters can be done on sequence level (SPS), picture level (PPS), slice level down to macroblock level. The following fifth signalling example shows syntax which includes transmission of one non-separable filter, several separable filters, and the position of the non-separable filter. It is to be noted that the transmission of more than one non-separable filter is also possible.

| slice_header( ) { | C | Descriptor |
|---|---|---|
| first_mb_in_slice | 2 | ue(v) |
| slice_type | 2 | ue(v) |
| pic_parameter_set_id | 2 | ue(v) |
| if( separate_colour_plane_flag == 1 ) | | |
| colour_plane_id | 2 | u(2) |
| frame_num | 2 | u(v) |
| if( !frame_mbs_only_flag ) { | | |
| field_pic_flag | 2 | u(1) |
| if( field_pic_flag ) | | |
| bottom_field_flag | 2 | u(1) |
| } | | |
| if( nal_unit_type == 5 ) | | |
| idr_pic_id | 2 | ue(v) |
| if( pic_order_cnt_type == 0 ) { | | |
| pic_order_cnt_lsb | 2 | u(v) |
| if( pic_order_present_flag && !field_pic_flag ) | | |
| delta_pic_order_cnt_bottom | 2 | se(v) |
| } | | |
| if( pic_order_cnt_type == 1 && !delta_pic_order_always_zero_flag ) { | | |
| delta_pic_order_cnt[ 0 ] | 2 | se(v) |
| if( pic_order_present_flag && !field_pic_flag ) | | |
| delta_pic_order_cnt[ 1 ] | 2 | se(v) |
| } | | |
| if( redundant_pic_cnt_present_flag ) | | |
| redundant_pic_cnt | 2 | ue(v) |
| if( slice_type == B ) | | |
| direct_spatial_mv_pred_flag | 2 | u(1) |
| if( slice_type == P || slice_type == SP || slice_type == B ) { | | |
| num_ref_idx_active_override_flag | 2 | u(1) |
| if( num_ref_idx_active_override_flag ) { | | |
| num_ref_idx_l0_active_minus1 | 2 | ue(v) |
| if( slice_type == B ) | | |
| num_ref_idx_l1_active_minus1 | 2 | ue(v) |
| } | | |
| } | | |
| ref_pic_list_reordering( ) | 2 | |
| if( ( weighted_pred_flag && ( slice_type == P || slice_type == SP ) ) || ( weighted_bipred_idc == 1 && slice_type == B ) ) | | |
| pred_weight_table( ) | 2 | |
| if( nal_ref_idc != 0 ) | | |
| dec_ref_pic_marking( ) | 2 | |
| if( entropy_coding_mode_flag && slice_type != I && slice_type != SI ) | | |
| cabac_init_idc | 2 | ue(v) |
| slice_qp_delta | 2 | se(v) |
| if( slice_type == SP || slice_type == SI ) { | | |
| if( slice_type == SP ) | | |
| sp_for_switch_flag | 2 | u(1) |
| slice_qs_delta | 2 | se(v) |
| } | | |
| if( deblocking_filter_control_present_flag ) { | | |
| disable_deblocking_filter_idc | 2 | ue(v) |
| if( disable_deblocking_filter_idc != 1 ) { | | |
| slice_alpha_c0_offset_div2 | 2 | se(v) |

| | 2 | se(v) |
|---|---|---|
| slice_beta_offset_div2 | 2 | se(v) |
| } | | |
| } | | |
| if( num_slice_groups_minus1 > 0 && | | |
| slice_group_map_type >= 3 && slice_group_map_type <= 5) | | |
| slice_group_change_cycle | 2 | u(v) |
| if( slice_type == P ‖ slice_type == B ) { | | |
| apply_adaptive_filter | 2 | u(1) |
| if( apply_adaptive_filter == 1 ) { | | |
| pos_of_non_sep_filter | 2 | ue(v) |
| for( i = 0; i < filter_length * filter_length; i++ ) | | |
| filter_coef_non_sep[ i ] ../* non-separable filter coefs */ | 2 | se(v) |
| for( filter_num = 0; filter_num < 14; filter_num++ ) | | |
| for( j = 0; j < 2; j++ ) | | |
| for( i = 0; i < filter_length; i++ ) | | |
| filter_coef_sep[ filter_num ][ j ][ i ] ../* separable filter coefs */ | 2 | se(v) |
| } | | |
| } | | |
| } | | |

Here, apply_adaptive_filter is 0 for a fixed filter, 1 for an adaptive filter; pos_of_non_sep_filter signals the sub-pel position where the non-separable filter is applied, viz. 0 for sub-pel position a and 15 for sub-pel position o, whereas a non-separable filter is applied to all other sub-pel positions; filter_coef_non_sep contains the coefficients of one non-separable filter; filter_coef_sep contains the coefficients of 14 non-separable filters in case of quarter-pel prediction precision.

DIFFERENTIAL CODING

In order to reduce the amount of overhead data in case of non-symmetric filters, a differential coding of filter coefficients depending on the sub-pel position can be applied. The idea is to calculate non-symmetric filters in order to enable optimal adaptation of the filter to the signal statistics, but to exploit the similarity of filter coefficients at certain sub-pel positions and therefore to apply a differential coding of filter coefficients at those positions to reduce the amount of overhead data. Thus, there is no joint optimization of filters and therefore no loss of prediction efficiency.

In case of a separable filter, for instance, the amount of signalling overhead may be reduced by transmitting filter coefficients of the vertical interpolation filters $h_j^{(p,q)}$ (cf. Eq. (11)) only in terms of the deviation to an horizontally adjacent interpolation filter,

$$\Delta h_j^{(p,q)} = h_j^{(p,q)} - h_j^{(p-1,q)}, \quad q = 1,...,n-1 ,$$  (15)

or in terms of the deviation to the corresponding full-pel row interpolation filter $h_j^{(0,q)}$ ,

$$\Delta h_j^{(p,q)} = h_j^{(p,q)} - h_j^{(0,q)}, \quad q = 1,...,n-1 .$$  (16)

In this manner, the fact is exploited that the vertical one-dimensional interpolation filters are likely to be "almost" invariant with respect to horizontal sub-pel translations. Hence, only the filter coefficients that correspond to a full-pel column need to be transmitted in their entirety, whereas filter coefficients for fractional-pel columns are coded in a differential manner.

Differential coding of filter coefficients may likewise be applied to any of the above described symmetries and limitations of the adaptive interpolation filter. In case of two "almost" symmetric sub-pel specific interpolation filters, only one of them is coded in its entirety, whereas the other one is differentially encoded in form of differences of the individual filter coefficients to a corresponding one of the first filter, e.g.

$$\Delta f_{i,j}^{(p,q)} \;=\; f_{i,j}^{(p,q)} - f_{1-i,j}^{(n-p,q)}, \tag{17}$$

in case of a symmetry with respect to a vertical axis, cf. Eq. (6).

Similarly, sub-pel specific interpolation filters with filter coefficients that are "almost" symmetric to themselves may also be encoded by transmitting a first half (i.e. coefficients with $i{\le}0$ in case of a symmetry with respect to a vertical axis, cf. Eq. (6)) of the coefficients in their entirety and only deviations from the symmetry for the second half (i.e. $i{>}0$) of the coefficients,

$$\Delta f_{i,j}^{(n/2,q)} \;=\; f_{i,j}^{(n/2,q)} - f_{1-i,j}^{(n/2,q)}, \;\; i{>}0. \tag{18}$$

The symmetry that is employed for differential coding has to be signalled to the decoder. This can be achieved either implicitly or explicitly along the lines of the above signalling examples. However, it is to be noted that the symmetry employed for differential coding has to be different from the set filter properties (otherwise, all deviations from this symmetry would be zero), and thus has to be signalled separately.

Besides the techniques described above it is possible to (further) reduce the bit rate for overhead information by applying several other approaches. Three exemplary techniques are described in the following.

If a sequence has similar statistics and characteristics for a couple of frames, the bit rate for the transmission of filter coefficients can be reduced by differential coding of filter with reference to "higher-level" filters. For example, filters for each sub-pel position are transmitted at sequence level (SPS). Then it is possible to transmit only the differences between the mentioned sequence-level filters and the current (picture-level, slice-level) filters. This approach can be applied also to slice-level filters as references and predicted macroblock-level filters, and so on. It is further possible to transmit a flag at picture-level, slice-level, macroblock-level signalling the use of the reference filter transmitted at sequence-level or the use of a new filter that will be transmitted in the following. However, the mentioned techniques have the drawback to be error-prone. If the reference filters are lost due to transmission errors, the predicted filter can not be restored.

Furthermore it is possible to perform a temporal prediction of filter coefficients, i.e. only the differences of filter coefficients from one picture (slice) to the next picture (slice) are coded. This may also be connected to motion estimation with different reference frames, i.e. once a reference frame is decided during motion estimation, the filter coefficients used for prediction will be coded with reference to the filter that was used for the corresponding reference frame. However, also this techniques is error-prone. If the reference filters are lost due to transmission errors, the predicted filter can not be restored.

The overhead bit rate can be reduced to a minimum by applying look-up tables that are known by encoder and decoder. By evaluation of a broad range of sequences, a fixed set of filters depending on sub-pel positions can be defined. An video encoder chooses the best filters depending on the application and the optimization criterion (high prediction efficiency, low complexity, ...) and transmits only the corresponding table indices. As the decoder knows the filter look-up table, it can restore the filters from the transmitted table indices. However, this approach has the drawback of leading to a reduced prediction efficiency as the filters cannot be adapted precisely to the signal statistics. It is further possible to transmit indices of look-up tables and, in addition, to transmit filter differences compared to the chosen filters from the look-up table.

It is further possible to switch between fixed and adaptive filters. Applying the fixed filter has the advantage that no additional filter information has to be transmitted. Applying the adaptive filter offers the advantage, that the filter is adapted to the signal statistics. The switching between fixed and adaptive filters may be done by applying a the rate-distortion criterion that considers also the resulting overhead bit rates. The described switching can be performed on sequences level (SPS), picture level (PPS), slice level, macroblock level or sub-pel position dependent. The fixed filter can be the standard filter of MPEG-4 AVC / H.264, for example. Different techniques can be applied for the coding of the filter-switch information. One can think of a 15-bit mask where each bit signals fixed or adaptive filter for a certain sub-pel position.

The above mentioned techniques or parts thereof may also be combined.

Summarizing, the present invention relates to hybrid video coders and decoders that employ motion compensated prediction with fractional-pel resolution and provides a method for employing an adaptive interpolation filter that optimizes the trade-off between prediction accuracy and signalling overhead. To this end, properties such as symmetries and other limitations of the adaptive interpolation filter are set beforehand. In this manner, the number of independent filter coefficients may be controlled. The filter coefficients for adaptive interpolation are then determined in accordance with the set filter properties. In order to allow the decoder to apply the very same interpolation for motion compensated prediction, the filter coefficients are signalled to the decoder. Signalling overhead is reduced by also encoding the coefficients in accordance with the set filter properties.

## Claims

1. A method for encoding video data based on motion compensated prediction with fractional-pel resolution and adaptive interpolation filtering, said method comprising the steps of:

   determining, in accordance with the video data, filter coefficients for a plurality of adaptive interpolation filters, each adaptive interpolation filter yielding interpolated pixel values at a distinct sub-pel position;
   obtaining a prediction error signal by applying motion compensated prediction based on the adaptive interpolation filters to the video data;
   generating encoded video data indicating the prediction error signal and the adaptive interpolation filters,

   **characterized by**
   setting filter properties independently for each of the adaptive interpolation filters, wherein the filter coefficients of the adaptive interpolation filters are determined in accordance with the set filter properties.

2. A method according to claim 1, wherein filter properties for the adaptive interpolation filters are set in accordance with the video data.

3. A method according to claim 2, wherein filter properties for the adaptive interpolation filters are set in accordance with image content of the video data.

4. A method according to claim 2, wherein filter properties for the adaptive interpolation filters are set so as to minimize a size of the encoded video data.

5. A method according to claim 2, wherein filter properties for the adaptive interpolation filters are set in accordance with image resolution of the video data.

6. A method according to claim 2 to 4, wherein filter properties for the adaptive interpolation filters are set on a slice-to-slice basis.

7. A method according to claim 2 to 5, wherein filter properties for the adaptive interpolation filters are set once for the entire video data.

8. A method according to any of claims 1 to 7, further comprising the step of encoding the set filter properties.

9. A method according to claim 8, further comprising the step of inserting information indicating the size of each adaptive interpolation filter into the encoded video data.

10. A method according to claim 8, further comprising the step of inserting information indicating a filter type of each adaptive interpolation filter into the encoded video data, said filter type indicating at least one of adaptive/non-adaptive, separable/non-separable, and symmetric/non-symmetric.

11. A method according to any of claims 1 to 10, further comprising the step of encoding filter coefficients of the adaptive interpolation filters in accordance with the set filter properties.

12. A method according to claim 11, wherein the filter coefficients are encoded by exploiting redundancies among the filter coefficients that are due to the set filter properties.

13. A method according to claim 11 or 12, wherein the filter coefficients are encoded by inserting information indicating values of at least some of the filter coefficients into the encoded video data.

14. A method according to any of claims 11 to 13, wherein the filter coefficients are encoded by inserting information indicating differences of values of at least some of the filter coefficients into the encoded video data.

15. A method according to claim 14, wherein the differences are computed between filter coefficients that are linked by a symmetry relation, the symmetry relation being one of a symmetry with respect to a horizontal axis, a symmetry with respect to a vertical axis, a symmetry with respect to a diagonal axis, a horizontal sub-pel translation, and a vertical sub-pel translation.

16. A method according to claim 14, wherein the differences are computed with respect to filter coefficients of a previously encoded adaptive interpolation filter.

17. A method according to claim 14, wherein the differences are computed with respect to filter coefficients of a predetermined interpolation filter.

18. A method according to any of claims 1 to 17, wherein the filter coefficients are determined by exploiting redundancies among the filter coefficients that are due to the set filter properties.

19. A method according to claim 18, wherein a first subset of filter coefficients is determined by applying a symmetry operation to a second subset of filter coefficients in accordance with the set filter properties.

20. A method according to claim 18, further comprising the step of determining a horizontal interpolation filter and a vertical interpolation filter in accordance with the video data, wherein filter coefficients of an adaptive interpolation filter are determined from the horizontal and the vertical interpolation filter in accordance with the set filter properties.

21. A method for decoding video data based on motion compensated prediction with fractional-pel resolution and adaptive interpolation filtering, said method comprising the steps of:

   receiving encoded video data indicating a prediction error signal and a plurality of adaptive interpolation filters, each adaptive interpolation filter yielding interpolated pixel values at a distinct sub-pel position;
   determining filter coefficients of the adaptive interpolation filters;
   obtaining a video signal by employing the prediction error signal and motion compensated prediction based on the filter coefficients of the adaptive interpolation filters;

   **characterized by**
   setting filter properties independently for each of the adaptive interpolation filters, wherein the filter coefficients of the adaptive interpolation filters are determined in accordance with the set filter properties.

22. A method according to claim 21, further comprising the step of decoding the set filter properties.

23. A method according to claim 21, further comprising the step of extracting information indicating the size of each adaptive interpolation filter from the encoded video data.

24. A method according to claim 21, further comprising the step of extracting information indicating a filter type of each adaptive interpolation filter from the encoded video data, said filter type indicating at least one of adaptive/non-adaptive, separable/non-separable, and symmetric/non-symmetric.

25. A method according to any of claims 21 to 24, further comprising the step of decoding filter coefficients of the adaptive interpolation filters in accordance with the set filter properties.

26. A method according to claim 25, wherein the filter coefficients are decoded by exploiting redundancies among the filter coefficients that are due to the set filter properties.

27. A method according to claim 25 or 26, wherein the filter coefficients are decoded by extracting information indicating values of at least some of the filter coefficients from the encoded video data.

28. A method according to any of claims 25 to 27, wherein the filter coefficients are decoded by extracting information indicating differences of values of at least some of the filter coefficients from the encoded video data.

29. A method according to claim 28, wherein the differences are computed between filter coefficients that are linked by a symmetry relation, the symmetry relation being one of a symmetry with respect to a horizontal axis, a symmetry with respect to a vertical axis, a symmetry with respect to a diagonal axis, a horizontal sub-pel translation, and a vertical sub-pel translation.

30. A method according to claim 28, wherein the differences are computed with respect to filter coefficients of a previously encoded adaptive interpolation filter.

31. A method according to claim 28, wherein the differences are computed with respect to filter coefficients of a predetermined interpolation filter.

32. A method according to any of claims 21 to 31, wherein the filter coefficients are determined by exploiting redundancies among the filter coefficient that are due to the set filter properties.

33. A method according to claim 32, wherein a first subset of filter coefficients is determined by applying a symmetry operation to a second subset of filter coefficients in accordance with the set filter properties.

34. A method according to claim 32, further comprising the step of determining a horizontal interpolation filter and a vertical interpolation filter in accordance with the encoded video data, wherein filter coefficients of an adaptive interpolation filter are determined from the horizontal and the vertical interpolation filter in accordance with the set filter properties.

35. An apparatus for encoding video data based on motion compensated prediction with fractional-pel resolution and adaptive interpolation filtering, said apparatus comprising:

a determining unit (161) for determining, in accordance with the video data, filter coefficients for a plurality of adaptive interpolation filters, each adaptive interpolation filter yielding interpolated pixel values at a distinct sub-pel position;
a motion compensated prediction unit (161) for obtaining a prediction error signal by applying motion compensated prediction based on the adaptive interpolation filters to the video data;
an encoder (190) for generating encoded video data indicating the prediction error signal and the adaptive interpolation filters,

**characterized by**
a setting unit for setting filter properties independently for each of the adaptive interpolation filters, wherein the filter coefficients of the adaptive interpolation filter are determined in accordance with the set filter properties.

36. An apparatus according to claim 35, wherein filter properties for the adaptive interpolation filters are set in accordance with the video data.

37. An apparatus according to claim 36, wherein filter properties for the adaptive interpolation filters are set in accordance with image content of the video data.

38. An apparatus according to claim 36, wherein filter properties for the adaptive interpolation filters are set so as to minimize a size of the encoded video data.

39. An apparatus according to claim 36, wherein filter properties for the adaptive interpolation filters are set in accordance with image resolution of the video data.

40. An apparatus according to claim 36 to 38, wherein filter properties for the adaptive interpolation filters are set on a slice-to-slice basis.

41. An apparatus according to claim 36 to 39, wherein filter properties for the adaptive interpolation filters are set once for the entire video data.

42. An apparatus according to any of claims 35 to 41, wherein the encoder is further adapted to encode the set filter properties.

**43.** An apparatus according to claim 42, wherein the encoder is further adapted to insert information indicating the size of each adaptive interpolation filter into the encoded video data.

**44.** An apparatus according to claim 42, wherein the encoder is further adapted to insert information indicating a filter type of each adaptive interpolation filter into the encoded video data, said filter type indicating at least one of adaptive/non-adaptive, separable/non-separable, and symmetric/non-symmetric.

**45.** An apparatus according to any of claims 35 to 44, wherein the encoder is further adapted to encode filter coefficients of the adaptive interpolation filters in accordance with the set filter properties.

**46.** An apparatus according to claim 45, wherein the filter coefficients are encoded by exploiting redundancies among the filter coefficients that are due to the set filter properties.

**47.** An apparatus according to claim 45 or 46, wherein the filter coefficients are encoded by inserting information indicating values of at least some of the filter coefficients into the encoded video data.

**48.** An apparatus according to any of claims 45 to 47, wherein the filter coefficients are encoded by inserting information indicating differences of values of at least some of the filter coefficients into the encoded video data.

**49.** An apparatus according to claim 48, wherein the differences are computed between filter coefficients that are linked by a symmetry relation, the symmetry relation being one of a symmetry with respect to a horizontal axis, a symmetry with respect to a vertical axis, a symmetry with respect to a diagonal axis, a horizontal sub-pel translation, and a vertical sub-pel translation.

**50.** An apparatus according to claim 48, wherein the differences are computed with respect to filter coefficients of a previously encoded adaptive interpolation filter.

**51.** An apparatus according to claim 48, wherein the differences are computed with respect to filter coefficients of a predetermined interpolation filter.

**52.** An apparatus according to any of claims 35 to 51, wherein the filter coefficients are determined by exploiting redundancies among the filter coefficient that are due to the set filter properties.

**53.** An apparatus according to claim 52, wherein a first subset of filter coefficients is determined by applying a symmetry operation to a second subset of filter coefficients in accordance with the set filter properties.

**54.** An apparatus according to claim 52, wherein the determining unit is further adapted to determine a horizontal interpolation filter and a vertical interpolation filter in accordance with the video data, wherein filter coefficients of an adaptive interpolation filter are determined from the horizontal and the vertical interpolation filter in accordance with the set filter properties.

**55.** An apparatus for decoding video data based on motion compensated prediction with fractional-pel resolution and adaptive interpolation filtering, said apparatus comprising:

a receiving unit for receiving encoded video data indicating a prediction error signal and a plurality of adaptive interpolation filters, each adaptive interpolation filter yielding interpolated pixel values at a distinct sub-pel position;
a determining unit for determining filter coefficients of the adaptive interpolation filters;
a motion compensated prediction unit for obtaining a video signal by employing the prediction error signal and motion compensated prediction based on the filter coefficients of the adaptive interpolation filters;

**characterized by**
a setting unit for setting filter properties independently for each of the adaptive interpolation filter, wherein the filter coefficients of the adaptive interpolation filter are determined in accordance with the set filter properties.

**56.** An apparatus according to claim 55, wherein the receiving unit is further adapted to decode the set filter properties.

**57.** An apparatus according to claim 55, wherein the receiving unit is further adapted to extract information indicating the size of each adaptive interpolation filter from the encoded video data.

**58.** An apparatus according to claim 55, wherein the receiving unit is further adapted to extract information indicating a filter type of each adaptive interpolation filter from the encoded video data, said filter type indicating at least one of adaptive/non-adaptive, separable/non-separable, and symmetric/non-symmetric.

**59.** An apparatus according to any of claims 55 to 58, wherein the receiving unit is further adapted to decode filter coefficients of the adaptive interpolation filters in accordance with the set filter properties.

**60.** An apparatus according to claim 59, wherein the filter coefficients are decoded by exploiting redundancies among the filter coefficients that are due to the set filter properties.

**61.** An apparatus according to claim 59 or 60, wherein the filter coefficients are decoded by extracting information indicating values of at least some of the filter coefficients from the encoded video data.

**62.** An apparatus according to any of claims 59 to 61, wherein the filter coefficients are decoded by extracting information indicating differences of values of at least some of the filter coefficients from the encoded video data.

**63.** An apparatus according to claim 62, wherein the differences are computed between filter coefficients that are linked by a symmetry relation, the symmetry relation being one of a symmetry with respect to a horizontal axis, a symmetry with respect to a vertical axis, a symmetry with respect to a diagonal axis, a horizontal sub-pel translation, and a vertical sub-pel translation.

**64.** An apparatus according to claim 62, wherein the differences are computed with respect to filter coefficients of a previously encoded adaptive interpolation filter.

**65.** An apparatus according to claim 62, wherein the differences are computed with respect to filter coefficients of a predetermined interpolation filter.

**66.** An apparatus according to any of claims 55 to 65, wherein the filter coefficients are determined by exploiting redundancies among the filter coefficient that are due to the set filter properties.

**67.** An apparatus according to claim 66, wherein a first subset of filter coefficients is determined by applying a symmetry operation to a second subset of filter coefficients in accordance with the set filter properties.

**68.** An apparatus according to claim 66, wherein the determining unit is further adapted to determining a horizontal interpolation filter and a vertical interpolation filter in accordance with the encoded video data, wherein filter coefficients of an adaptive interpolation filter are determined from the horizontal and the vertical interpolation filter in accordance with the set filter properties.

**69.** A method or apparatus according to any of claims 1 to 68, wherein the filter properties are set by selecting at least one filter property from a plurality of predefined candidate filter properties.

**70.** A method according to claim 69, wherein the plurality of predefined candidate filter properties comprises symmetry relations between filter coefficients of two distinct adaptive interpolation filters.

**71.** A method according to claim 69, wherein the plurality of predefined candidate filter properties comprises symmetry relations between filter coefficients of an adaptive interpolation filter.

**72.** A method according to claim 70 or 71, wherein the symmetry relations comprise at least one of a symmetry with respect to a horizontal axis, a symmetry with respect to a vertical axis, a symmetry with respect to a diagonal axis, and a rotational symmetry.

**73.** A method according to any of claims 69 to 72, wherein the plurality of predefined candidate filter properties comprises limitations of possible values for subsets of filter coefficients of the adaptive interpolation filters.

**74.** A method according to claim 73, wherein the limitations comprise a limitation of an adaptive interpolation filter to a one-dimensional interpolation filter.

75. A method according to claim 73, wherein the limitations comprise a limitation of an adaptive interpolation filter to separable filters.

76. A method according to claim 73, wherein the limitations comprise a limitation of an adaptive interpolation filter to filters that are separable into a horizontal and a vertical interpolation filter, wherein at least one of the horizontal and the vertical interpolation filter is invariant with respect to sub-pel translations.

77. A method according to any of claims 69 to 76, wherein the plurality of predefined candidate filter properties comprises asymmetric adaptive interpolation filters.

# Fig. 1

# Fig. 2

# Fig. 3

# Fig. 4

EP 2 048 886 A1

Fig. 5

EP 2 048 886 A1

32

Fig. 6F

Fig. 6E

Fig. 6D

Fig. 6C

Fig. 6B

Fig. 6A

EP 2 048 886 A1

Fig. 7A

Fig. 7B

Fig. 7C

Fig. 7D

Fig. 7E

Fig. 7F

Fig. 8A

Fig. 8B

Fig. 8C

**European Patent Office**

# EUROPEAN SEARCH REPORT

Application Number

EP 07 01 9946

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | VATIS Y ET AL: "Locally adaptive non-separable interpolation filter for H.264/AVC" PROCEEDINGS. INTERNATIONAL CONFERENCE ON IMAGE PROCESSING, IEEE, NEW YORK, NY, US, 8 November 1996 (1996-11-08), pages 33-36, XP002454497 * abstract * * paragraphs [0002], [0003], [0005] * | 1-4, 6-10, 21-24, 35-38, 40-44, 55-58 | INV. H04N7/26 H04N7/36 |
| X | VATIS Y ET AL: "Motion-And Aliasing-Compensated Prediction Using a Two-Dimensional Non-Separable Adaptive Wiener Interpolation Filter" IMAGE PROCESSING, 2005. ICIP 2005. IEEE INTERNATIONAL CONFERENCE ON GENOVA, ITALY 11-14 SEPT. 2005, PISCATAWAY, NJ, USA,IEEE, vol. 2, 11 September 2005 (2005-09-11), pages 894-897, XP010851198 ISBN: 978-0-7803-9134-5 | 1-5,21, 35-39,55 | |
| A | * abstract * * paragraphs [0001] - [0003] * | 10-20, 45-54, 70-77 | TECHNICAL FIELDS SEARCHED (IPC) H04N |
| X | KIMATA H ET AL: "3D ADAPTIVE MOTION VECTOR CODING INTEGRATED WITH BLOCK-BASED ADAPTIVE INTERPOLATION FILTER" SYSTEMS & COMPUTERS IN JAPAN, WILEY, HOBOKEN, NJ, US, vol. 35, no. 14, 1 December 2004 (2004-12-01), pages 10-20, XP001211995 ISSN: 0882-1666 * abstract * * paragraphs [0002], [0003], [04.3], [04.4], [05.3] * | 1-4, 6-38, 40-77 | |

-/--

The present search report has been drawn up for all claims

| Place of search | Date of completion of the search | Examiner |
|---|---|---|
| Munich | 2 September 2008 | Cakiroglu Garton, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## EUROPEAN SEARCH REPORT

Application Number

EP 07 01 9946

**European Patent Office**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WEDI THOMAS: "Advanced motion compensated prediction methods" ITU-T VIDEO CODING EXPERTS GROUP (ITU-T SG16 Q.6), XX, XX, 18 October 2003 (2003-10-18), pages 1-8, XP002454495 * abstract * * paragraph [0003] * | 1-4, 6-38, 40-68 | |
| X | MIYAMOTO: "Modified Adaptive Interpolation Filter" VIDEO STANDARDS AND DRAFTS, XX, XX, no. JVT-D078, 26 July 2002 (2002-07-26), XP030005352 * abstract * * paragraph [0002] * | 1,21,35, 55 | |
| A | US 2004/076333 A1 (ZHANG HUIPIN [US] ET AL) 22 April 2004 (2004-04-22) * the whole document * | 1-77 | |
| A | WO 03/058945 A (NOKIA CORP [FI]; NOKIA INC [US]) 17 July 2003 (2003-07-17) * the whole document * | 1-77 | TECHNICAL FIELDS SEARCHED (IPC) |
| A | EP 1 746 839 A (THOMSON LICENSING [FR]) 24 January 2007 (2007-01-24) * the whole document * | 1-77 | |

The present search report has been drawn up for all claims

| Place of search | Date of completion of the search | Examiner |
|---|---|---|
| Munich | 2 September 2008 | Cakiroglu Garton, S |

EPO FORM 1503 03.82 (P04C01)

## ANNEX TO THE EUROPEAN SEARCH REPORT
## ON EUROPEAN PATENT APPLICATION NO.

EP 07 01 9946

This annex lists the patent family members relating to the patent documents cited in the above-mentioned European search report.
The members are as contained in the European Patent Office EDP file on
The European Patent Office is in no way liable for these particulars which are merely given for the purpose of information.

02-09-2008

| Patent document cited in search report | | Publication date | Patent family member(s) | | Publication date |
|---|---|---|---|---|---|
| US 2004076333 | A1 | 22-04-2004 | JP | 2004147328 A | 20-05-2004 |
| WO 03058945 | A | 17-07-2003 | AU | 2003201069 A1 | 24-07-2003 |
| | | | BR | 0304545 A | 03-11-2004 |
| | | | CN | 1615645 A | 11-05-2005 |
| | | | EP | 1466477 A2 | 13-10-2004 |
| | | | HU | 0500030 A2 | 28-07-2005 |
| | | | JP | 2005514872 T | 19-05-2005 |
| | | | MX | PA04006814 A | 06-12-2004 |
| | | | RU | 2302707 C2 | 10-07-2007 |
| EP 1746839 | A | 24-01-2007 | WO | 2007009875 A2 | 25-01-2007 |

EPO FORM P0459

For more details about this annex : see Official Journal of the European Patent Office, No. 12/82